(19) Europäisches Patentamt / European Patent Office / Office européen des brevets

(11) **EP 3 675 090 B1**

(12) **EUROPEAN PATENT SPECIFICATION**

(45) Date of publication and mention of the grant of the patent:
**26.04.2023 Bulletin 2023/17**

(21) Application number: **18847949.7**

(22) Date of filing: **16.08.2018**

(51) International Patent Classification (IPC):
*G09C 1/00* (2006.01)    *H04L 9/08* (2006.01)
*H04L 9/32* (2006.01)

(52) Cooperative Patent Classification (CPC):
**H04L 9/085; G09C 1/00;** H04L 2209/46

(86) International application number:
**PCT/JP2018/030442**

(87) International publication number:
**WO 2019/039383 (28.02.2019 Gazette 2019/09)**

(54) **SHARE GENERATING DEVICE, RECONSTRUCTING DEVICE, SECURE COMPUTATION SYSTEM, SHARE GENERATION METHOD, RECONSTRUCTION METHOD, PROGRAM, AND RECORDING MEDIUM**

VORRICHTUNG ZUR ERZEUGUNG VON ANTEILEN, WIEDERHERSTELLUNGSVORRICHTUNG, SICHERES BERECHNUNGSSYSTEM, VERFAHREN ZUR ERZEUGUNG VON ANTEILEN, WIEDERHERSTELLUNGSVERFAHREN, PROGRAMM UND AUFZEICHNUNGSMEDIUM

DISPOSITIF DE GÉNÉRATION DE PARTIES, DISPOSITIF DE RECONSTRUCTION, SYSTÈME DE CALCUL SÉCURISÉ, PROCÉDÉ DE GÉNÉRATION DE PARTIES, PROCÉDÉ DE RECONSTRUCTION, PROGRAMME ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2017 JP 2017159346**

(43) Date of publication of application:
**01.07.2020 Bulletin 2020/27**

(73) Proprietor: **Nippon Telegraph And Telephone Corporation**
**Tokyo 100-8116 (JP)**

(72) Inventors:
• **IKARASHI, Dai**
  **Musashino-shi,**
  **Tokyo 180-8585 (JP)**
• **KIKUCHI, Ryo**
  **Musashino-shi,**
  **Tokyo 180-8585 (JP)**
• **CHIDA, Koji**
  **Musashino-shi,**
  **Tokyo 180-8585 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 2 879 324        WO-A1-2015/053185**
**WO-A1-2016/147718      JP-A- 2014 137 516**
**JP-A- 2015 135 380      JP-A- 2016 178 550**

• **HUGO KRAWCZYK ED - STINSON D R: "Secret Sharing Made Short", 22 August 1993 (1993-08-22), ADVANCES IN CRYPTOLOGY (CRYPTO). SANTA BARBARA, AUG. 22 - 26, 1993; [PROCEEDINGS OF THE ANNUAL INTERNATIONAL CRYPTOLOGY CONFERENCE (CRYPTO)], BERLIN, SPRINGER, DE, PAGE(S) 136 - 146, XP019194050, ISBN: 978-3-540-57766-9 * page 141 ***

**Description**

[TECHNICAL FIELD]

The present invention relates to cryptographic technologies and, in particular, relates to a secure computation technique.

[BACKGROUND ART]

One of secret sharing schemes is Shamir's secret sharing scheme (see, for example, Non-patent Literature 1 and so forth).

Further reference is made to Patent Literature 1, which discloses a secret sharing system that transforms shares in computational secret sharing to shares in homomorphic secret sharing. On a data distribution apparatus, a key selecting part selects K'-1 keys $s_j$. A pseudorandom number generation part generates pseudorandom numbers $r_j$ from the keys $s_j$. An encryption part generates a ciphertext c from information a by using the pseudorandom numbers $r_j$. A key division part divides each of the keys $s_j$ into N shares $f_g(n)$ by using an arbitrary sharing scheme S1. A ciphertext division part divides the ciphertext c into N shares $f_c(n)$ by using an arbitrary sharing scheme S0. On each of distributed data transform apparatuses, when K shares $f_{sj}(i)$ are input into the distributed data transform apparatuses, the reconstruction part generates a reconstructed value $U_j$ by reconstruction of shares $f_{sj}(i)$ by using the secret sharing scheme S1 and, when K shares $f_c(i)$ are input into the distributed data transform apparatuses, the reconstruction part generates the reconstructed value $U_j$ by reconstruction of shares $f_c(i)$ by using the sharing scheme S0. A redivision part divides the reconstructed value $U_j$ into N shares $f_{Uj}(n)$ by using a homomorphic secret sharing scheme S2. A transform part generates a share $g_a(i)$ of the information a from K' shares $f_{Uj}$.

[PRIOR ART LITERATURE]

[PATENT LITERATURE]

Patent Literature 1: EP 2 879 324 A1

[NON-PATENT LITERATURE]

Non-patent Literature 1: A. Shamir, "How to Share a Secret", Communications of the ACM, November 1979, Volume 22, Number 11, pp. 612-613.

[SUMMARY OF THE INVENTION]

[PROBLEMS TO BE SOLVED BY THE INVENTION]

Secure computation devices can perform secure computation using shares obtained in accordance with Shamir's secret sharing scheme without changing them. However, when shares are distributed among N secure computation devices in accordance with the secret sharing scheme and secure computation is performed, the total amount of data of shares, which indicate the secure computation result, is N times the amount of data of plaintext. Thus, if these shares are transmitted without being changed, the total amount of communication data is also N times the amount of data of the plaintext.

An object of the present invention is to provide a technique for generating shares whose total amount of communication data is small from shares in accordance with Shamir's secret sharing scheme.

[MEANS TO SOLVE THE PROBLEMS]

In view of the above problems, the present invention provides a share generating device, a reconstructing device, a secure computation system, a share generation method, and a reconstruction method, as well as corresponding programs and computer-readable recording media having the features of respective independent claims. Embodiments are described in the dependent claims.

Each share generating device $A_i$ included in N share generating devices $A_0$, ..., $A_{N-1}$ executes the following. It is to be noted that N is an integer greater than or equal to 2, m is an integer greater than or equal to 1, m(i) is an integer greater than w(i(+)) and less than m, m(i(-)) is an integer greater than w(i) and less than m, w(i) is an integer greater than or equal to 1 and less than m, i = 0, ..., N-1 holds, j = 0, ..., N-1 holds, i(+) = i+1 mod N holds, i(-) = i-1 mod N holds,

$P_{m(i)}$ is a function, and the range of the function $P_{m(i)}$ belongs to a set $F^{m(i)}$ whose members are sequences of $m(i)$ elements of field F. Further, $\alpha = \lambda(i, i(-))[\alpha]_i + \lambda(i(-), i)[\alpha]_{i(-)}$ and $\alpha = \lambda(i, i(+))[\alpha]_i + \lambda(i(+), i)[\alpha]_{i(+)}$ hold, where $\alpha$ is a reconstructed value, $[\alpha]_i$, $[\alpha]_{i(-)}$ and $[\alpha]_{i(+)}$ are shares in accordance with Shamir's secret sharing scheme, and $\lambda(i, i(-))$, $\lambda(i(-), i)$, $\lambda(i, i(+))$ and $\lambda(i(+), i)$ are Lagrange coefficients.

A share $[x]_i \in F^m$ of plaintext x in accordance with Shamir's secret sharing scheme is divided by secure computation into N shares $[x_0]_i, ..., [x_{N-1}]_i$, which satisfy $m = m(0)+...+m(N-1)$ and $[x_j]_i \in F^{m(j)}$, by secure computation, where $F^m$ represents a set whose members are sequences of m elements of field F. Each share generating device $A_i$ obtains a function value $r_i = P_{m(i(-))}(s_i) \in F^{m(i(-))}$ of a seed $s_i \in F^{w(i)}$ wherein the amount of data of the seed $s_i$ is smaller than the amount of data of the function value $r_i$, obtains a first calculated value $\zeta_i = \lambda(i, i(-))[x_{i(-)}]_i + r_i \in F^{m(i(-))}$ using the Lagrange coefficient $\lambda(i, i(-))$, a share $[x_{i(-)}]_i$, and the function value ri, and outputs the first calculated value $\zeta_i$ to a share generating device $A_{i(-)}$. Each share generating device $A_i$ accepts a second calculated value $\zeta_{i(+)} \in F^{m(i)}$, obtains a third calculated value $z_i = \lambda(i, i(+))[x_i]_i + \zeta_{i(+)} \in F^{m(i)}$ using the Lagrange coefficient $\lambda(i, i(+))$, a share $[x_i]_i$, and the second calculated value $\zeta_{i(+)}$, and obtains a share $SS_i$ containing the seed si and the third calculated value $z_i$, the share $SS_i$ being a share of the plaintext x in secret sharing, and outputs the share $SS_i$.

[EFFECTS OF THE INVENTION]

In the present invention, it is possible to generate shares whose total amount of communication data is small from shares in accordance with Shamir's secret sharing scheme.

[BRIEF DESCRIPTION OF THE DRAWINGS]

Fig. 1 is a block diagram illustrating the configuration of a secure computation system of an embodiment.
Fig. 2 is a block diagram illustrating the functional configuration of a share generating device of the embodiment.
Fig. 3 is a block diagram illustrating the functional configuration of a reconstructing device of the embodiment.
Fig. 4 is a flow diagram for explaining a share generation method of the embodiment.
Fig. 5 is a flow diagram for explaining a reconstruction method of the embodiment.

[DETAILED DESCRIPTION OF THE EMBODIMENTS]

Hereinafter, embodiments of the present invention will be described with reference to the drawings.

[First embodiment]

First, a first embodiment will be described.

< Configuration >

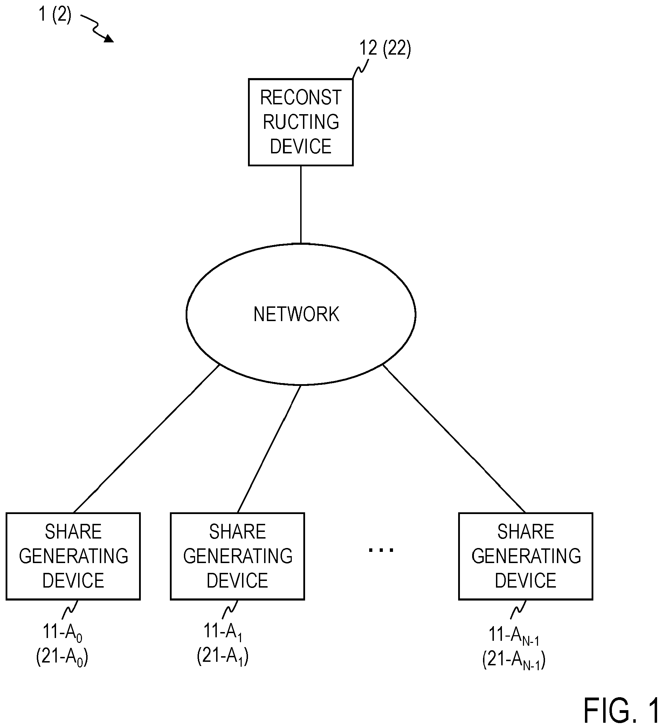

As illustrated in Fig. 1, a secure computation system 1 of the present embodiment includes N share generating devices 11-$A_0$, ..., 11-$A_{N-1}$ and a reconstructing device 12, and these devices can communicate with one another through a network such as the Internet. It is to be noted that N is an integer greater than or equal to 2. For example, N is an integer greater than or equal to 3. One example of N is N = 3. Although Fig. 1 illustrates one reconstructing device 12, the secure computation system 1 may include a plurality of reconstructing devices.

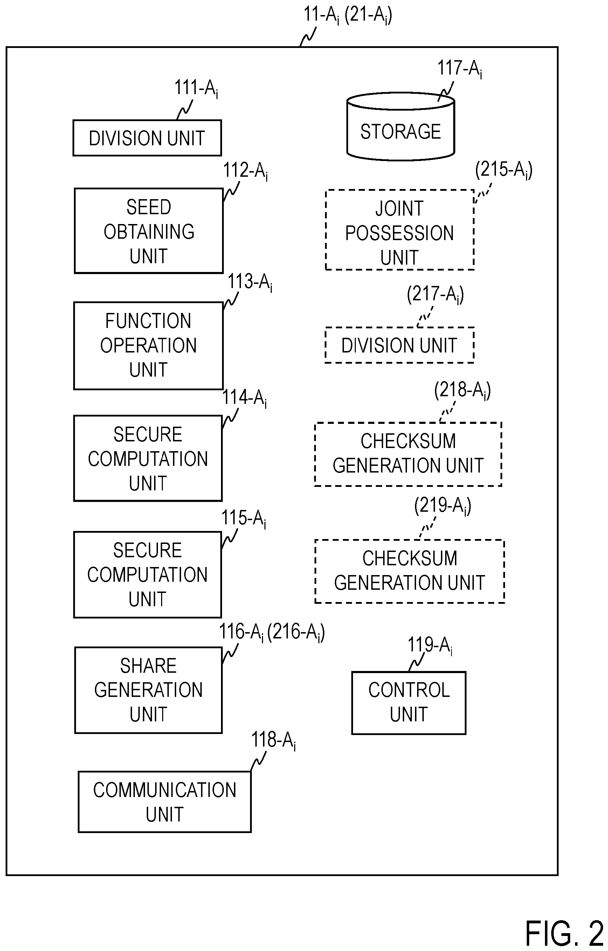

As illustrated in Fig. 2, each share generating device 11-$A_i$ (i = 0, ..., N-1) of the present embodiment includes a division unit 111-$A_i$, a seed obtaining unit 112-$A_i$, a function operation unit 113-$A_i$, secure computation units 114-$A_i$ and 115-$A_i$, a share generation unit 116-$A_i$, a storage 117-$A_i$, a communication unit 118-$A_i$, and a control unit 119-$A_i$ and executes each processing under control of the control unit 119-$A_i$. Information output from each processing unit (a part that performs processing) of the share generating device 11-$A_i$ is stored in the storage 117-$A_i$ and is read therefrom when necessary and input to another processing unit.

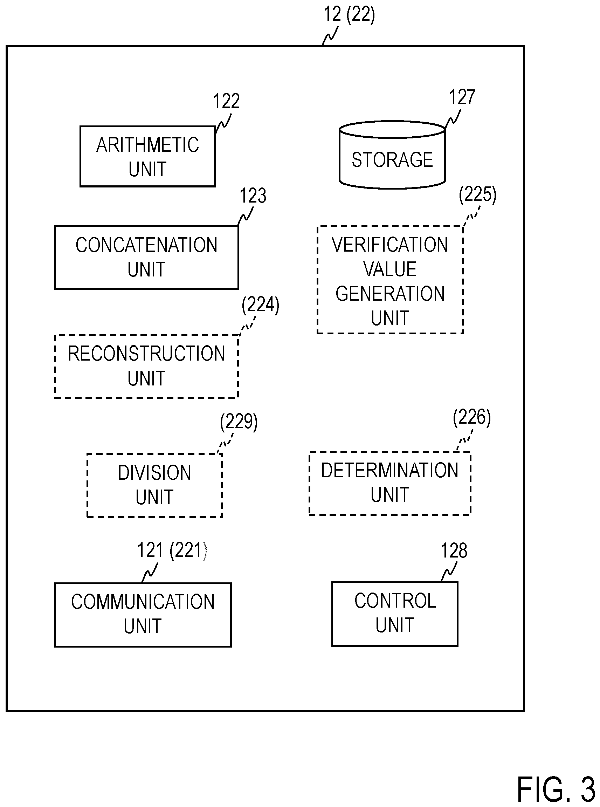

As illustrated in Fig. 3, the reconstructing device 12 of the present embodiment includes a communication unit 121, an arithmetic unit 122, a concatenation unit 123, a storage 127, and a control unit 128 and executes each processing under control of the control unit 128. Information output from each processing unit of the reconstructing device 12 is stored in the storage 127 and is read therefrom when necessary and input to another processing unit.

<Share generation method>

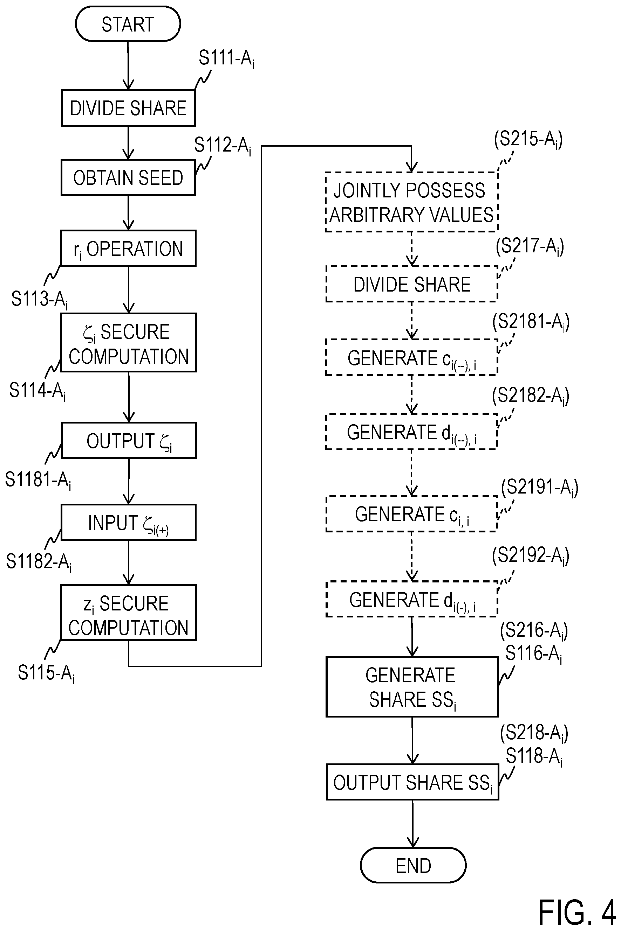

A share generation method (a share conversion method) which is performed by each share generating device 11-$A_i$ (i = 0, ..., N-1) (Fig. 2) of the present embodiment will be described using Fig. 4. It is assumed that a share $[x]_i \in F^m$ of plaintext $x \in F^m$ in accordance with Shamir's secret sharing scheme is stored in the storage 117-$A_i$ of each share generating device 11-$A_i$. A "share" means a fragment in secret sharing. Shamir's secret sharing scheme of the embodiment is a 2-out-of-N threshold secret sharing scheme, in which, given any two different shares, a reconstructed value (plaintext) can be reconstructed; however, given any one piece of share information, information on the reconstructed value cannot be obtained at all. The sum of a value which is obtained by multiplying a share $[\alpha]_i$ in accordance with Shamir's secret sharing scheme by a Lagrange coefficient $\lambda(i, i(-))$ and a value which is obtained by multiplying a share $[\alpha]_{i(-)}$ in accordance with Shamir's secret sharing scheme by a Lagrange coefficient $\lambda(i(-), i)$ is a reconstructed value $\alpha$, and the sum of a value which is obtained by multiplying the share $[\alpha]_i$ by a Lagrange coefficient $\lambda(i, i(+))$ and a value which is obtained by multiplying a share $[\alpha]_{i(+)}$ in accordance with Shamir's secret sharing scheme by a Lagrange coefficient $\lambda(i(+), i)$ is also the reconstructed value $\alpha$. That is,

$$\alpha = \lambda(i, i(-))[\alpha]_i + \lambda(i(-), i)[\alpha]_{i(-)}$$

$$\alpha = \lambda(i, i(+))[\alpha]_i + \lambda(i(+), i)[\alpha]_{i(+)}$$

are satisfied. In other words, $\lambda(i, i(-))$ is a coefficient by which the share $[\alpha]_i$ is multiplied when the reconstructed value $\alpha$ is reconstructed from the share $[\alpha]_i$ and the share $[\alpha]_{i(-)}$ and $\lambda(i(-), i)$ is a coefficient by which the share $[\alpha]_{i(-)}$ is multiplied at the time of this reconstruction. $\lambda(i, i(+))$ is a coefficient by which the share $[\alpha]_i$ is multiplied when the reconstructed value $\alpha$ is reconstructed from the share $[\alpha]_i$ and the share $[\alpha]_{i(+)}$ and $\lambda(i(+), i)$ is a coefficient by which the share $[\alpha]_{i(+)}$ is multiplied at the time of this reconstruction. It is to be noted that i(+) = i+1 mod N and i(-) = i-1 mod N hold. These Lagrange coefficients $\lambda(i, i(-))$, $\lambda(i(-), i)$, $\lambda(i, i(+))$, and $\lambda(i(+), i)$ can be easily determined by publicly known Lagrange's interpolation formula. $F^m$ means a set whose members are sequences of elements of m fields F. One example of the set $F^m$ is m-dimensional vectors, whose members are elements of m fields F. $\alpha \in \beta$ means that $\alpha$ is a member of $\beta$. m is an integer greater than or equal to 1. For instance, m is an integer greater than or equal to 2 or an integer greater than or equal to 3. An example of the field F is a set of remainders modulo a prime number p ($\alpha$ mod p, where $\alpha$ is any number), and the operation result in the field F in this case is obtained as a remainder modulo a prime number p. $p \geq 3$ holds and, for instance, $p = 2^{61}-1$ holds. Moreover, the share $[x]_i$ may be a share transmitted from another device or a share obtained by performing secure computation on a share transmitted from another device.

The division unit 111-$A_i$ (a first division unit) reads the share $[x]_i \in F^m$ of the plaintext x in accordance with Shamir's secret sharing scheme described above from the storage 117-$A_i$. The division unit 111-$A_i$ divides the share $[x]_i$ into N shares $[x_0]_i$, ..., $[x_{N-1}]_i$ by secure computation and outputs the shares $[x_0]_i$, ..., $[x_{N-1}]_i$. It is to be noted that m(i) is an integer greater than or equal to 0 and less than m (for example, m(i) is an integer greater than or equal to 1), m = m(0)+...+m(N-1) is satisfied, and, for i = 0, ..., N-1 and j = 0, ..., N-1, $[x_j]_i \in F^{m(j)}$ is satisfied. It is also possible to make m(0) = ... = m(N-1) = m/N hold if m is a multiple of N. However, irrespective of whether or not m is a multiple of N, all of m(0), ..., m(N-1) may not be identical with one another. For example, at least part of m(0), ..., m(N-1) may be 0. It is to be noted that $\gamma \in F^0$ represents a null value. If m(i) = 0, $[x_j]_i \in F^{m(i)}$ is a null value. $[x_j]_i$ is a share of plaintext $x_j$ in accordance with Shamir's secret sharing scheme described above. The plaintext x is expressed by N $x_0 \in F^{m(0)}$, ..., $x_{N-1} \in F^{m(N-1)}$. For example, the plaintext x is expressed as a sequence $x_0|$ ... $|x_{N-1}$ obtained by arranging N $x_0 \in F^{m(0)}$, ..., $x_{N-1} \in F^{m(N-1)}$. To divide the share $[x]_i$ into the N shares $[x_0]_i$, ..., $[x_{N-1}]_i$ by secure computation, it is only necessary to, for instance, separate and divide the share $[x]_i$ directly into the N shares $[x_0]_i \in F^{m(0)}$, ..., $[x_{N-1}]_i \in F^{m(N-1)}$. It is to be noted that, if m = 1, only one of m(0), ..., m(N-1) is 1 and the others are 0. In this case, the division unit 111-$A_i$ does not have to divide the share $[x]_i$ and only has to output any one of the shares $[x_0]_i$, ..., $[x_{N-1}]_i$ as $[x]_i$ and output all of the other shares as null values. As described above, the share $[x]_i$ is expressed by the N shares $[x_0]_i$, ..., $[x_{N-1}]_i$. For instance, the share $[x]_i$ is expressed as a sequence $[x_0]_i|$ ... $|[x_{N-1}]_i$ obtained by arranging the N shares $[x_0]_i$, ..., $[x_{N-1}]_i$ (Step S111-$A_i$).

The seed obtaining unit 112-$A_i$ obtains a seed si and outputs the seed $s_i$. The seed si is an element of a set $F^{w(i)}$ whose members are sequences of elements of w(i) fields F ($s_i \in F^{w(i)}$). It is to be noted that w(i) is an integer greater than or equal to 1 and less than m. The seed $s_i$ (i = 0, ..., N-1) may be an arbitrary value or an output value obtained by other processing. The "arbitrary value" may be a random number (a pseudo random number or a true random number), a value selected from a plurality of preset values, or a value obtained by other processing. It is to be noted that the seed si corresponding to the share $[x_j]_i$ which is a null value may be set at a null value (Step S112-$A_i$).

The function operation unit 113-$A_i$ obtains a function value $r_i = P_{m(i(-))}(s_i) \in F^{m(i(-))}$ (for example, a pseudo random number) using the seed $s_i$ as input and outputs the function value $r_i$. It is to be noted that $P_{m(i(-))}(s_i)$ is a function

value which is obtained by operating a function $P_{m(i(-))}$ on the seed $s_i$. $P_{m(i)}:F^{w(i(+))} \rightarrow F^{m(i)}$ is a function and the range of a function $P_{m(i)}$ belongs to a set $F^{m(i)}$ whose members are sequences of elements of $m(i)$ fields F. One example of the set $F^{m(i)}$ is a set of $m(i)$-dimensional vectors, whose members are elements of $m(i)$ fields F. The domain of definition of the function $P_{m(i)}$ belongs to a set $F^{w(i(+))}$ whose members are sequences of elements of $w(i(+))$ fields F. $w(i(+)) < m(i)$ is satisfied (the amount of data of the seed $s_i$ is smaller than the amount of data of the function value $r_i$). An example of $P_{m(i)}$ is a pseudo random number generating function. That is, $P_{m(i(-))}$ is a function and the range of the function $P_{m(i(-))}$ belongs to a set $F^{m(i(-))}$ whose members are sequences of elements of $m(i(-))$ fields F. The domain of definition of the function $P_{m(i(-))}$ belongs to the set $F^{w(i)}$ whose members are sequences of elements of $w(i)$ fields F. Preferably, $w(i) < m(i(-))$ is satisfied. It is to be noted that the function value $r_i$ corresponding to the share $[x_j]_i$ which is a null value may be set at a null value (Step S113-$A_i$).

The secure computation unit 114-$A_i$ (a first secure computation unit) obtains, using a share $[xi(\_)]_i$ and the function value $r_i$ as input, a calculated value (a first calculated value) $\zeta_i = \lambda(i, i(-))[x_{(i(-)}]_i+r_i \in F^{m(i(-))}$ using the Lagrange coefficient $\lambda(i, i(-))$, the share $[x_{(i(-)}]_i$, and the function value $r_i$ and outputs the calculated value $\zeta_i$. It is to be noted that $\zeta_i = \lambda(i, i(-))[x_{(i(-)}]_i+r_i$ corresponding to the share $[x_{(i(-)}]_i$ which is a null value is set at a null value (Step S114-$A_i$).

The calculated value $\zeta_i$ is input to the communication unit 118-$A_i$. The communication unit 118-$A_i$ (an output unit) outputs the calculated value $\zeta_i$ to a share generating device 11-$A_{i(-)}$. The output calculated value $\zeta_i$ is transmitted to the share generating device 11-$A_{i(-)}$ through the network (Step S1181-$A_i$).

A calculated value (a second calculated value) $\zeta_{i(+)} = \lambda(i(+), i)[x_i]_{i(+)}+r_{i(+)} \in F^{m(i)}$ ($r_{i(+)} = P_{m(i)}(s_{i(+)})$) output from a share generating device 11-$A_{i(+)}$ is transmitted to the share generating device 11-$A_i$ through the network in a similar manner. It is to be noted that $\zeta_{i(+)} = \lambda(i(+), i)[x_i]_{i(+)}+r_{i(+)}$ corresponding to the share $[x_i]_{i(+)}$ which is a null value is set at a null value. The calculated value $\zeta_{i(+)}$ is received (accepted) by the communication unit 118-$A_i$ (an input unit) and output (Step S1182-$A_i$).

The secure computation unit 115-$A_i$ (a second secure computation unit) obtains, using a share $[x_i]_i$ and the calculated value $\zeta_{i(+)}$ as input, a calculated value (a third calculated value) $z_i = \lambda(i, i(+))[x_i]_i+\zeta_{i(+)} \in F^{m(i)}$ using the Lagrange coefficient $\lambda(i, i(+))$, the share $[x_i]_i$, and the calculated value $\zeta_{i(+)}$ and outputs the calculated value $z_i$. Since $\zeta_{i(+)} = \lambda(i(+), i)[x_i]_{i(+)}+r_{i(+)}$, $z_i = \lambda(i, i(+))[x_i]_i+\lambda(i(+), i)[x_i]_{i(+)}+r_{i(+)}$ holds. Moreover, since $x_i = \lambda(i, i(+))[x_i]_i+\lambda(i(+), i)[x_i]_{i(+)}$, $z_i = x_i+r_{i(+)}$ holds. It is to be noted that $z_i$ corresponding to the share $[x_i]_i$ which is a null value is set at a null value (Step S115-$A_i$).

The seed $s_i$ output from the seed obtaining unit 112-$A_i$ and the calculated value $z_i$ output from the secure computation unit 115-$A_i$ are input to the share generation unit 116-$A_i$. The share generation unit 116-$A_i$ obtains information containing the seed $s_i$ and the calculated value $z_i$ as a share $SS_i$ of the plaintext x in secret sharing and outputs the share $SS_i$. The share $SS_i$ corresponding to the seed $s_i$ and the calculated value $z_i$ which are null values is information in which the seed $s_i$ and the calculated value $z_i$ are set at null values (Step S116-$A_i$).

The share $SS_i$ output from the share generation unit 116-$A_i$ is input to the communication unit 118-$A_i$. The communication unit 118-$A_i$ outputs the share $SS_i$ to the reconstructing device 12. The output share $SS_i$ is transmitted to the reconstructing device 12 through the network. The size of the seed $s_i$ and N do not depend on m. In (2, N)-Shamir's secret sharing, the order of magnitude of the total share size (the total share size which is transmitted) that relates to the data size m of the plaintext x is O(Nm); in the present embodiment, the order of magnitude of the total share size that relates to the data size m of the plaintext x is just O(m). The size of each share is O(m/N). For example, the total amount of data of the share $SS_i$ which is transmitted from each share generating device 11-$A_i$ (i = 0, ..., N-1) is less than N times the amount of data of the plaintext x. For instance, the amount of data of each share $SS_i$ is smaller than the amount of data of the plaintext x (Step S118 -$A_i$).

<Reconstruction method>

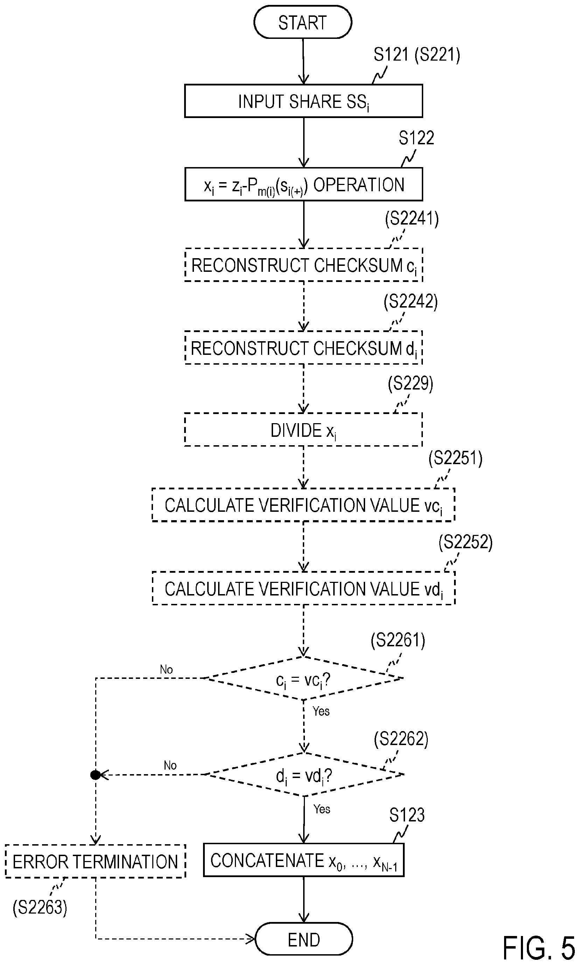

A reconstruction method which is performed by the reconstructing device 12 (Fig. 3) of the present embodiment will be described using Fig. 5.

N shares $SS_0$, ..., $SS_{N-1}$ output from the share generating devices 11-$A_0$, ..., 11-$A_{N-1}$ are received (accepted) by the communication unit 121 (an input unit) of the reconstructing device 12 (Step S121).

For each i = 0, ..., N-1, the calculated value $z_i$ contained in the share $SS_i$ and a seed $s_{i(+)}$ contained in a share $SS_{i(+)}$ are input to the arithmetic unit 122. The arithmetic unit 122 obtains a member $x_i = z_i-P_{m(i)}(s_{i(+)}) \in F^{m(i)}$ using the calculated value $z_i$ and the seed $\zeta_{i(+)}$ and outputs the member $x_i$. It is to be noted that $P_{m(i)}(s_{i(+)})$ is a function value which is obtained by operating the function $P_{m(i)}$ on the seed $s_{i(+)}$. The function $P_{m(i)}$ is the same as the function defined in Step S113-$A_i$. As indicated in Step S115-$A_i$, $z_i = x_i+r_{i(+)}$ holds. Moreover, as indicated in Step S1182-$A_i$, $r_{i(+)} = P_{m(i)}(s_{i(+)})$ holds. Thus, the member $x_i$ is obtained by an operation $z_i-P_{m(i)}(s_{i(+)})$. It is to be noted that the member $x_i$ corresponding to the calculated value $z_i$ and the seed $\zeta_{i(+)}$ which are null values is set at a null value (Step S122).

The members $x_0$, ..., $x_{N-1}$ obtained in the arithmetic unit 122 are input to the concatenation unit 123. The concatenation unit 123 obtains a reconstructed value x obtained by concatenating (joining) the members $x_0$, ..., $x_{N-1}$ to one another and outputs the reconstructed value x. For example, a sequence $x_0| ... |x_{N-1}$ obtained by arranging $x_0 \in$

$F^{m(0)}$, ..., $x_{N-1} \in F^{m(N-1)}$ is x (Step S123).

<Features of the present embodiment>

Each share generating device 11-$A_i$ (i = 0, ..., N-1) obtains the share $SS_i$ containing the seed $s_i$ and the calculated value $z_i \in F^{m(i)}$ from the share $[x]_i$ in accordance with Shamir's secret sharing scheme and outputs the share $SS_i$. Here, the size of the seed si and N do not depend on m. In (2, N)-Shamir's secret sharing, the order of magnitude of the total share size (the total share size which is transmitted) that relates to the data size m of the plaintext x is O(Nm); in the present embodiment, the order of magnitude of the total share size that relates to the data size m of the plaintext x is just O(m). The size of each share is O(m/N). For example, by setting m(i) and w(i) so that m(i) < m and w(i) < m, it is possible to make the total amount of data of the shares $SS_0$, ..., $SS_{N-1}$ less than N times the amount of data of the plaintext $x \in F^m$. This makes it possible to make the total amount of communication data smaller than that of shares in accordance with Shamir's secret sharing scheme. Each share generating device 11-$A_i$ can obtain the share $SS_i$ whose amount of data is small from the share $[x]_i$ in accordance with Shamir's secret sharing scheme without obtaining information on the plaintext x. The reconstructing device 12 can reconstruct the plaintext x using the N shares $SS_0$, ..., $SS_{N-1}$.

[Second embodiment]

A second embodiment is a modification of the first embodiment. In the present embodiment, a checksum corresponding to a share is generated at the time of share generation and the share is verified using the checksum at the time of reconstruction of plaintext. In the following description, an explanation of a matter that has already been described in the first embodiment is sometimes simplified, using the same reference character as that of the first embodiment.

<Configuration>

As illustrated in Fig. 1, a secure computation system 2 of the present embodiment includes N share generating devices 21-$A_0$, ..., 21-$A_{N-1}$ and a reconstructing device 22, and these devices can communicate with one another through a network such as the Internet. It is to be noted that N of the present embodiment is an integer greater than or equal to 3. One example of N is N = 3. Although Fig. 1 illustrates one reconstructing device 22, the secure computation system 2 may include a plurality of reconstructing devices.

As illustrated in Fig. 2, each share generating device 21-$A_i$ (i = 0, ..., N-1) of the present embodiment includes a division unit 111-$A_i$, a seed obtaining unit 112-$A_i$, a function operation unit 113-$A_i$, secure computation units 114-$A_i$ and 115-$A_i$, a joint possession unit 215-$A_i$, a share generation unit 216-$A_i$, a division unit 217-$A_i$, checksum generation units 218-$A_i$ and 219-$A_i$, a storage 117-$A_i$, a communication unit 118-$A_i$, and a control unit 119-$A_i$ and executes each processing under control of the control unit 119-$A_i$. Information output from each processing unit (a part that performs processing) of the share generating device 21-$A_i$ is stored in the storage 117-$A_i$ and is read therefrom when necessary and input to another processing unit.

As illustrated in Fig. 3, the reconstructing device 22 of the present embodiment includes a communication unit 221, an arithmetic unit 122, a concatenation unit 123, a reconstruction unit 224, a verification value generation unit 225, a determination unit 226, a division unit 229, a storage 127, and a control unit 128 and executes each processing under control of the control unit 128. Information output from each processing unit of the reconstructing device 22 is stored in the storage 127 and is read therefrom when necessary and input to another processing unit.

<Share generation method>

A share generation method which is performed by the share generating device 21-$A_i$ (Fig. 2) will be described using Fig. 4. First, in place of the share generating device 11-$A_i$, the share generating device 21-$A_i$ executes the processing from Steps S111-$A_i$ to S115-$A_i$ described in the first embodiment. It is to be noted that, in the present embodiment, N and m are integers greater than or equal to 3.

Next, the joint possession unit 215-$A_i$ of each share generating device 21-$A_i$ possesses an arbitrary value $t_{i(--)} \in F^v$ jointly with a joint possession unit 215-$A_{i(--)}$ of a share generating device 21-$A_{i(--)}$, possesses an arbitrary value $t_i \in F^v$ jointly with a joint possession unit 215-$A_{i(++)}$ of a share generating device 21-$A_{i(++)}$, possesses an arbitrary value $u_{i(--)} \in F^v$ jointly with a joint possession unit 215-$A_{i(+)}$ of a share generating device 21-$A_{i(+)}$, and possesses an arbitrary value $u_i \in F^v$ jointly with a joint possession unit 215-$A_{i(-)}$ of a share generating device 21-$A_{i(-)}$. That is, the joint possession unit 215-$A_i$ and the joint possession unit 215-$A_{i(--)}$ obtain the same arbitrary value $t_{i(--)}$, the joint possession unit 215-$A_i$ and the joint possession unit 215-$A_{i(++)}$ obtain the same arbitrary value $t_i$, the joint possession unit 215-$A_i$ and the joint possession unit 215-$A_{i(+)}$ obtain the same arbitrary value $u_{i(--)}$, and the joint possession unit 215-$A_i$ and the joint possession

unit 215-$A_{i(-)}$ obtain the same arbitrary value $u_{i(-)}$. It is to be noted that v is an integer greater than or equal to 1 and, for example, v = 1 holds. A greater data amount reduction effect can be achieved if v is less than or equal to m (for instance, v is less than m). i(+) = i+1 mod N, i(-) = i-1 mod N, i(++) = i+2 mod N, and i(--) = i-2 mod N hold. Joint possession of an arbitrary value $\gamma$ between a joint possession unit $\beta_1$ and a joint possession unit $\beta_2$ may be performed by transmission of the arbitrary value $\gamma$ or information for identification of the arbitrary value $\gamma$ from the joint possession unit $\beta_1$ to the joint possession unit $\beta_2$ or may be performed by transmission of the arbitrary value $\gamma$ or information for identification of the arbitrary value $\gamma$ from the joint possession unit $\beta_2$ to the joint possession unit $\beta_1$, or the joint possession unit $\beta_1$ and the joint possession unit $\beta_2$ may jointly possess the arbitrary value $\gamma$ by jointly possessing a common seed value and executing the same processing using the common seed value. The arbitrary values $t_{i(--)}$, $t_i$, $u_{i(--)}$, and $u_{i(-)}$ may be random numbers (pseudo random numbers or true random numbers), values obtained by other processing, or values selected from a plurality of predetermined values. Joint possession of the arbitrary values $t_{i(--)}$, ti, $u_{i(--)}$, and $u_{i(-)}$ may be performed when any one of the processing from Steps S111-$A_i$ to S115-$A_i$ is executed, in response to requests from the other joint possession units 215-$A_{i(--)}$, 215-$A_{i(++)}$, 215-$A_{i(+)}$, and 215-$A_{i(-)}$, or in response to other events, or may be performed in advance. The joint possession unit 215-$A_i$ outputs the obtained arbitrary values $t_{i(--)}$, $t_i$, $u_{i(--)}$, and $u_{i(-)}$ (Step S215-$A_i$).

The division unit 217-$A_i$ divides, using the share $[x_j]_i$ (j = 0, ..., N-1) output from the division unit 111-$A_i$ as input, the share $[x_j]_i$ into m(j) shares $[(x_j)_0]_i$, ..., $[(x_j)_{m(j)-1}]_i \in$ F by secure computation and outputs the shares $[(x_j)_0]_i$, ..., $[(x_j)_{m(j)-1}]_i$. To divide the share $[x_j]_i$ into m(j) shares $[(x_j)_0]_i$, ..., $[(x_j)_{m(j)-1}]_i \in$ F by secure computation, it is only necessary to, for instance, separate and divide the share $[x_j]_i$ directly into m(j) shares $[(x_j)_0]_i$, ..., $[(x_j)_{m(j)-1}]_i \in$ F. It is to be noted that, if $[x_j]_i \in F^{m(i)}$ is a null value, $[(x_j)_0]_i$, ..., $[(x_j)_{m(j)-1}]_i$ are also null values (Step S217-Ai).

The arbitrary values $t_{i(--)}$ and $u_{i(--)}$ and the shares $[(x_j)_0]_i$, ..., $[(x_j)_{m(j)-1}]_i$ (j = 0, ..., N-1) are input to the checksum generation unit 218-$A_i$. The checksum generation unit 218-$A_i$ (a first checksum generation unit) obtains checksums $c_{i(--), i}$ and $d_{i(--), i}$ in the following manner, using the arbitrary values $t_{i(--)}$ and $u_{i(--)}$ and the shares $[(x_j)_0]_i$, ..., $[(x_j)_{m(j)-1}]_i$, and outputs the checksums $c_{i(--), i}$ and $d_{i(--), i}$.

$$c_{i(--), \, i} = \sum_{0 \leq j < m'(i(--))} \{ t_{i(--)}{}^{j+1} [(x'_{i(--)})_j]_i \} + t_{i(--)}{}^{m'(i(--))+1} [(x'_{i(--)})_{m'(i(--))-1}]_i \in F^v$$

$$d_{i(--), \, i} = \sum_{0 \leq j < m'(i(--))} \{ u_{i(--)}{}^{j+1} [(x'_{i(--)})_j]_i \} + u_{i(--)}{}^{m'(i(--))+1} [(x'_{i(--)})_{m'(i(--))-1}]_i \in F^v$$

It is to be noted that $\delta$ = 0, ..., N-1 holds, ceil is a ceiling function, and m'(i) is ceil(m(i)/v). $[x'_\delta)_j]_i$ is $([(x_\delta)_{vj}]_i, [(x_\delta)_{vj+1}]_i, ..., [(x_\delta)_{v(j+1)-1}]_i) \in F^v$ belonging to a set $F^v$. Moreover, for j = m'(i)-1, if the number of $[(x_\delta)_{vj}]_i, [(x_\delta)_{vj+1}]_i, ..., [x_\delta)_{v(j+1)-1}]_i$ is less than v, it is assumed that $[(x_\delta)_{(m'(i)-1)}]_i = ([(x_\delta)_{v(m'(i)-1)}]_i, [(x_\delta)_{v(m'(i)-1)+1}]_i, ..., [(x_\delta)_{m(i)-1}]_i, 0, ..., 0) \in F^v$. The checksums $c_{i(--), i}$ and $d_{i(--), i}$ may be calculated on an extension field of the order v over basic field F. $\sum_{0 \leq j < m'(i(--))} \{\beta_j\}$ represents $\beta_0 + ... + \beta_{m'(i(--))}$ and $\beta_{i(-)}{}^\gamma$ represents $(\beta_{i(-)})^\gamma$ (Steps S2181-$A_i$ and S2182-$A_i$).

The arbitrary values $t_i$ and $u_{i(-)}$ and the shares $[(x_j)_0]_i$, ..., $[(x_j)_{m(j)-1}]_i$ (j = 0, ..., N-1) are input to the checksum generation unit 219-$A_i$. The checksum generation unit 219-$A_i$ (a second checksum generation unit) obtains checksums $c_{i, i}$ and $d_{i(-), i}$ in the following manner, using the arbitrary values $t_i$ and $u_{i(-)}$ and the shares $[(x_j)_0]_i$, ..., $[(x_j)_{m(j)-1}]_i$, and outputs the checksums $c_{i, i}$ and $d_{i(-), i}$.

$$c_{i, \, i} = \sum_{0 \leq j < m'(i)} \{ t_i{}^{j+1} [(x'_i)_j]_i \} + t_i{}^{m'(i)+1} [(x'_i)_{m'(i)-1}]_i \in F^v$$

$$d_{i(-), \, i} = \sum_{0 \leq j < m'(i(-))} \{ u_{i(-)}{}^{j+1} [(x'_{i(-)})_j]_i \} + u_{i(-)}{}^{m'(i(-))+1} [(x'_{i(-)})_{m'(i(-))-1}]_i \in F^v$$

It is to be noted that $\beta_i{}^\gamma$ represents $(\beta_i)^\gamma$ and $\beta_{i(-)}{}^\gamma$ represents $(\beta_{i(-)})^\gamma$. The checksums $c_{i, i}$ and $d_{i(-), i}$ may be calculated on an extension field of the order v over basic field F (Steps S2191-$A_i$ and S2192-$A_i$).

The seed si output from the seed obtaining unit 112-$A_i$, the calculated value $z_i$ output from the secure computation unit 115-$A_i$, the arbitrary values $t_{i(--)}$, $t_i$, $u_{i(--)}$, and $u_{i(-)}$ output from the joint possession unit 215-Ai, the checksums $c_{i(--), i}$ and $d_{i(--), i}$ output from the checksum generation unit 218-$A_i$, and the checksums $c_{i, i}$ and $d_{i(-), i}$ output from the checksum generation unit 219-$A_i$ are input to the share generation unit 216-$A_i$. The share generation unit 216-$A_i$ obtains information containing the seed $s_i$, the calculated value $z_i$, the arbitrary values $t_{i(--)}$, $t_i$, $u_{i(--)}$, and $u_{i(-)}$, and the checksums $c_{i(--), i}$, $d_{i(--), i}$, $c_{i, i}$, and $d_{i(-), i}$ as a share $SS_i$ of the plaintext x in secret sharing and outputs the share $SS_i$ (Step S216-$A_i$).

The share $SS_i$ output from the share generation unit 216-$A_i$ is input to the communication unit 118-$A_i$. The communication unit 118-$A_i$ outputs the share $SS_i$ to the reconstructing device 22. The output share $SS_i$ is transmitted to the reconstructing device 22 through the network. The size of the seed $s_i$, N, and v do not depend on m. In (2, N)-Shamir's secret sharing, the order of magnitude of the total share size (the total share size which is transmitted) that relates to the data size m of the plaintext x is $O(Nm)$; in the present embodiment, the order of magnitude of the total share size that relates to the data size m of the plaintext x is just $O(m)$. The size of each share is $O(m/N)$. For example, the total amount of data of the share $SS_i$ which is transmitted from each share generating device $21\text{-}A_i$ ($i = 0, ..., N-1$) is less than N times the amount of data of the plaintext x. For instance, the amount of data of each share $SS_i$ is smaller than the amount of data of the plaintext x (Step S218-$A_i$).

<Reconstruction method>

A reconstruction method which is performed by the reconstructing device 22 (Fig. 3) of the present embodiment will be described using Fig. 5.

N shares $SS_0, ..., SS_{N-1}$ output from the share generating devices $21\text{-}A_0, ..., 21\text{-}A_{N-1}$ are received (accepted) by the communication unit 221 (an input unit) of the reconstructing device 22 and output (Step S221).

Next, as described in the first embodiment, the arithmetic unit 122 obtains a member $x_i = z_i\text{-}P_{m(i)}(s_{i(+)}) \in F^{m(i)}$ using the calculated value $z_i$ contained in the share $SS_i$ and a seed $s_{i(+)}$ contained in a share $SS_{i(+)}$ and outputs the member $x_i$ (Step S122).

The checksums $c_{i(--), i}$, $d_{i(--), i}$, $c_{i, i}$, and $d_{i(-), i}$ contained in each share $SS_i$ ($i = 0, ..., N-1$) are input to the reconstruction unit 224. The reconstruction unit 224 reconstructs a checksum $c_i = \Sigma_{0 \leq j < m'(i)}\{t_i^{j+1}(x'_i)_j\}+t_i^{m'(i)+1}(x'_i)_{m'(i)-1}$ using the checksum $c_{i, i}$ contained in the share $SS_i$ and a checksum $c_{i, i(++)}$ contained in a share $SS_{i(++)}$ as shares in accordance with Shamir's secret sharing scheme (the 2-out-of-N threshold secret sharing scheme) described above and outputs the checksum $c_i$. Likewise, the reconstruction unit 224 reconstructs a checksum $d_i = \Sigma_{0 \leq j < m'(i)}\{u_i^{j+1}(x'_i)_j\}+u_i^{m'(i)+1}(x'_i)_{m'(i)-1}$ using a checksum $d_{i, i(+)}$ contained in the share $SS_{i(+)}$ and a checksum $d_{i, i(++)}$ contained in the share $SS_{i(++)}$ as shares in accordance with Shamir's secret sharing scheme described above and outputs the checksum di. Here, $c_{i, i(++)} = \Sigma_{0 \leq j < m'(i)}\{t_i^{j+1}[(x'_i)_j]_{i(++)}\}+t_i^{m'(i)+1}[(x'_i)_{m'(i)-1}]_{i(++)}$ contained in the share $SS_{i(++)}$ and $c_{i, i} = \Sigma_{0 \leq j < m'(i)}\{t_i^{j+1}[(x'_i)_j]_i\}+t_i^{m'(i)+1}[(x'_i)_{m'(i)-1}]_i$ contained in the share $SS_i$ are shares of the checksum $c_i = \Sigma_{0 \leq j < m'(i)}\{t_i^{j+1}(x'_i)_j\}+t_i^{m'(i)+1}(x'_i)_{m'(i)-1}$ in accordance with Shamir's secret sharing scheme described above. Thus, the reconstruction unit 224 can reconstruct the checksum $c_i$ from $c_{i, i(++)}$, $c_{i, i}$, and the Lagrange coefficients. Moreover, $d_{i, i(+)} = \Sigma_{0 \leq j < m'(i)}\{u_i^{j+1}[(x'_i)_j]_{i(+)}\}+u_i^{m'(i)+1}[(x'_i)_{m'(i)-1}]_{i(+)}$ contained in the share $SS_{i(+)}$ and $d_{i, i(++)} = \Sigma_{0 \leq j < m'(i)}\{u_i^{j+1}[(x'_i)_j]_{i(++)}\}+u_i^{m'(i)+1}[(x'_i)_{m'(i)-1}]_{i(++)}$ contained in the share $SS_{i(++)}$ are shares of the checksum $d_i = \Sigma_{0 \leq j < m'(i)}\{u_i^{j+1}[(x'_i)_j]\}+u_i^{m'(i)+1}(x'_i)_{m'(i)-1}$ in accordance with Shamir's secret sharing scheme described above. Thus, the reconstruction unit 224 can reconstruct the checksum $d_i$ from $d_{i, i(+)}$, $d_{i, i(++)}$, and the Lagrange coefficients (Steps S2241 and S2242).

The member $x_i$ output from the arithmetic unit 122 is input to a division unit 229. The division unit 229 divides the member $x_i \in F^{m(i)}$ into m(i) sub-members $(x_i)_0, ..., (x_i)_{m(i)-1} \in F$ and outputs the m(i) sub-members $(x_i)_0, ..., (x_i)_{m(i)-1}$. For example, the member $x_i$ is expressed as a sequence $(x_i)_0| ... |(x_i)_{m(i)1}$ obtained by arranging the m(i) sub-members $(x_i)_0, ..., (x_i)_{m(i)-1}$, and the division unit 229 divides $x_i = (x_i)_0| ... |(x_i)_{m(i)-1}$ into the sub-members $(x_i)_0, ..., (x_i)_{m(i)-1}$ (Step S229).

The arbitrary value $t_i$ contained in the share $SS_i$ or $SS_{i(++)}$, the arbitrary value $u_i$ contained in the share $SS_{i(+)}$ or $SS_{i(++)}$, and the sub-members $(x_i)_0, ..., (x_i)_{m(i)-1}$ output from the division unit 229 are input to the verification value generation unit 225. The verification value generation unit 225 obtains verification values $vc_i$ and $vd_i$ in the following manner, using the arbitrary values $t_i$ and $u_i$ and the sub-members $(x_i)_0, ..., (x_i)_{m(i)-1}$, and outputs the verification values $vc_i$ and $vd_i$.

$$vc_i = \Sigma_{0 \leq j < m'(i)}\{t_i^{j+1}(x'_i)_j\}+t_i^{m'(i)+1}(x'_i)_{m'(i)-1} \in F^v$$

$$vd_i = \Sigma_{0 \leq j < m'(i)}\{u_i^{j+1}(x'_i)_j\}+u_i^{m'(i)+1}(x'_i)_{m'(i)-1} \in F^v$$

It is to be noted that m'(i) is ceil(m(i)/v), $(x'_i)_j$ is $((x_i)_{vj}, (x_i)_{vj+1}, ..., (x_i)_{v(j+1)-1}) \in F^v$ belonging to the set $F^v$, and $\beta_i^\gamma$ represents $(\beta_i)^\gamma$ (Step S2251, S2252).

The checksums $c_i$ and $d_i$ output from the reconstruction unit 224 and the verification values $vc_i$ and $vd_i$ output from the verification value generation unit 225 are input to the determination unit 226. The determination unit 226 determines whether $c_i = vc_i$ is satisfied for all $i = 0, ..., N-1$ (Step S2261). When a determination is made that $c_i \neq vc_i$ for any i, the control unit 128 makes the processing terminate with an error message (Step S2263). On the other hand, when a determination is made that $c_i = vc_i$ is satisfied for all $i = 0, ..., N-1$, the determination unit 226 determines whether $d_i = vd_i$ is satisfied for all $i = 0, ..., N-1$ (Step S2262). When a determination is made that $d_i \neq vd_i$ for any i, the control unit 128 makes the processing terminate with an error message (Step S2263). On the other hand, when a determination is made that $d_i = vd_i$ is satisfied for all $i = 0, ..., N-1$, the members $x_0, ..., x_{N-1}$ obtained in the arithmetic unit 122 are input to the concatenation unit 123. In this case, as described in the first embodiment, the concatenation unit 123 obtains a reconstructed value x obtained by concatenating the members $x_0, ..., x_{N-1}$ to one another and outputs the reconstructed value x (Step S123).

<Features of the present embodiment>

Also in the present embodiment, it is possible to make the total amount of communication data smaller than that of shares in accordance with Shamir's secret sharing scheme. Each share generating device $21\text{-}A_i$ can obtain the share $SS_i$ whose amount of data is small from the share $[x]_i$ in accordance with Shamir's secret sharing scheme without obtaining information on the plaintext x. The reconstructing device 22 can reconstruct the plaintext x using the N shares $SS_0, ..., SS_{N-1}$.

Furthermore, in the present embodiment, the share $SS_i$ contains checksums and the reconstructing device 22 performs verification of the checksums. Thus, the reconstructing device 22 can detect unauthorized processing performed in any share generating device $21\text{-}A_i$. Moreover, since the reconstructing device 22 verifies two types of checksums, the checksums $c_i$ and $d_i$, for each i = 0, ..., N-1, it is also possible to detect the generation of an unauthorized checksum in any share generating device $21\text{-}A_i$.

[First modification of the second embodiment]

In the second embodiment, when a determination is made in Step S2261 that $c_i = vc_i$ is satisfied, a determination as to whether $d_i = vd_i$ is satisfied is made in Step S2262. However, other determination processing may be performed, as long as processing in Step S123 is executed when $c_i = vc_i$ and $d_i = vd_i$ are satisfied for all i = 0, ..., N-1; otherwise Step S2263 is executed.

[Second modification of the second embodiment]

In the second embodiment, the reconstructing device 22 verifies two types of checksums, the checksums $c_i$ and $d_i$. However, the reconstructing device 22 may be configured so as to verify only one of the checksums $c_i$ and $d_i$. Processing in this case is as follows.

<Share generation method>

After the processing from Steps $S111\text{-}A_i$ to $S115\text{-}A_i$ is executed, in place of the processing in Step $S215\text{-}A_i$, (Processing I) the joint possession unit $215\text{-}A_i$ of each share generating device $21\text{-}A_i$ possesses the arbitrary value $t_{i(--)} \in F$ jointly with the joint possession unit $215\text{-}A_{i(--)}$ of the share generating device $21\text{-}A_{i(--)}$ and possesses the arbitrary value $t_i \in F$ jointly with the joint possession unit $215\text{-}A_{i(++)}$ of the share generating device $21\text{-}A_{i(++)}$ or (Processing II) the joint possession unit $215\text{-}A_i$ of each share generating device $21\text{-}A_i$ possesses the arbitrary value $u_{i(--)} \in F$ jointly with the joint possession unit $215\text{-}A_{i(+)}$ of the share generating device $21\text{-}A_{i(+)}$ and possesses the arbitrary value $u_{i(-)} \in F$ jointly with the joint possession unit $215\text{-}A_{i(-)}$ of the share generating device $21\text{-}A_{i(-)}$. Only Processing I is executed for all i = 0, ..., N-1 or only Processing II is executed for all i = 0, ..., N-1.

Next, the division unit $217\text{-}A_i$ executes the processing in Step $S217\text{-}A_i$.

Then, the following processing is executed depending on Processing I or Processing II. When joint possession of the arbitrary value $t_{i(--)}$ has been performed by the joint possession unit $215\text{-}A_i$ (Processing I), the checksum generation unit $218\text{-}A_i$ performs Step $S2181\text{-}A_i$ described above, and obtains the checksum $c_{i(--),\ i} = \Sigma_{0 \leq j < m'(i(--))}\{t_{i(--)}^{j+1}[(x'_{i(--)})_j]_i\} + t_{i(--)}^{m'(i(--))+1}[(x'_{i(--)})_{m'(i(--)) 1}]_i \in F^v$ and outputs the checksum $c_{i(--),\ i}$. In this case, the processing in Step $S2182\text{-}A_i$ described above is not executed.

On the other hand, when joint possession of the arbitrary value $u_{i(--)}$ has been performed by the joint possession unit $215\text{-}A_i$ (Processing II), the checksum generation unit $218\text{-}A_i$ performs Step $S2182\text{-}A_i$ described above, and obtains the checksum $d_{i(--),\ i} = \Sigma_{0 \leq j < m'(i(--))}\{u_{i(--)}^{j+1}[(x'_{i(--)})_j]_i\} + u_{i(--)}^{m'(i(--))+1}[(x'_{i(--)})_{m'(i(--))-1}]_i \in F^v$ and outputs the checksum $d_{i(--),\ i}$. In this case, the processing in Step $S2181\text{-}A_i$ described above is not executed.

Next, when joint possession of the arbitrary value $t_i$ has been performed by the joint possession unit $215\text{-}A_i$ (Processing I), the checksum generation unit $219\text{-}A_i$ performs Step $S2191\text{-}A_i$ described above, and obtains the checksum $c_{i,\ i} = \Sigma_{0 \leq j < m'(i)}\{t_i^{j+1}[(x'_i)_j]_i\} + t_i^{m'(i)+1}[(x'_i)_{m'(i)-1}]_i \in F^v$ and outputs the checksum $c_{i,\ i}$. In this case, the processing in Step $S2192\text{-}A_i$ described above is not executed.

On the other hand, when joint possession of the arbitrary value $u_{i(-)}$ has been performed by the joint possession unit $215\text{-}A_i$ (Processing II), the checksum generation unit $219\text{-}A_i$ performs Step $S2192\text{-}A_i$ described above, and obtains the checksum $d_{i(-),\ i} = \Sigma_{0 \leq j < m'(i(-))}\{u_{i(-)}^{j+1}[(x'_{i(-)})_j]_i\} + u_{i(-)}^{m'(i(-))+1}[(x'_{i(-)})_{m'(i(-))-1}]_i \in F^v$ and outputs the checksum $d_{i(-),\ i}$. In this case, the processing in Step $S2191\text{-}A_i$ described above is not executed.

Then, in place of the processing in Step $S216\text{-}A_i$, the following processing is executed depending on Processing I or Processing II. When joint possession of the arbitrary value $t_{i(-)}$ and the arbitrary value $t_i$ has been performed by the joint possession unit 215-$A_i$ (Processing I), the share generation unit 216-$A_i$ obtains information containing the seed si, the calculated value $z_i$, the arbitrary value $t_{i(--)}$, the arbitrary value $t_i$, the checksum $c_{i(--),\, i}$, and the checksum $c_{i,\, i}$ as the share $SS_i$ and outputs the share $SS_i$. On the other hand, when joint possession of the arbitrary value $u_{i(-)}$ and the arbitrary value $u_{i(-)}$ has been performed by the joint possession unit 215-$A_i$ (Processing II), the share generation unit 216-$A_i$ obtains information containing the seed si, the calculated value $z_i$, the arbitrary value $u_{i(-)}$, the arbitrary value $u_{i(-)}$, the checksum $d_{i(-),\, i}$, and the checksum $d_{i(-),\, i}$ as the share $SS_i$ and outputs the share $SS_i$. Then, the processing in Step S218-$A_i$ is executed.

<Reconstruction method>

After the processing in Steps S221 and S122 is executed, the reconstruction unit 224 performs the following processing. When the share $SS_i$ contains the checksum $c_{i,\, i}$ and the share $SS_{i(++)}$ contains the checksum $c_{i,\, i(++)}$ (Processing I), the reconstruction unit 224 executes Step S2241, and reconstructs the checksum $c_i$ using the checksum $c_{i,\, i}$ and the checksum $c_{i,\, i(++)}$ as shares in accordance with Shamir's secret sharing scheme and outputs the checksum $c_i$. In this case, the processing in Step S2242 described above is not executed.

On the other hand, when the share $SS_{i(+)}$ contains the checksum $d_{i,\, i(+)}$ and the share $SS_{i(++)}$ contains the checksum $d_{i,\, i(++)}$ (Processing II), the reconstruction unit 224 executes Step S2242, and reconstructs the checksum $d_i$ using the checksum $d_{i,\, i(+)}$ and the checksum $d_{i,\, i(++)}$ as shares in accordance with Shamir's secret sharing scheme and outputs the checksum $d_i$. In this case, the processing in Step S2241 described above is not executed.

Next, the division unit 229 executes the processing in Step S229.

Then, the following processing is executed depending on Processing I or Processing II. When the checksum $c_i$ has been reconstructed (Processing I), the verification value generation unit 225 executes the processing in Step S2251, and obtains the verification value $vc_i = \Sigma_{0 \le j < m'(i)}\{t_i{}^{j+1}[(x'_i)_j]\}+t_i{}^{m'(i)+1}(x'_i)_{m'(i)-1} \in F^v$ and outputs the verification value $vc_i$. In this case, the processing in Step S2252 described above is not executed. On the other hand, when the checksum $d_i$ has been reconstructed (Processing II), the verification value generation unit 225 executes the processing in Step S2252, and obtains the verification value $vd_i = \Sigma_{0 \le j < m'(i)}\{u_i{}^{j+1}[(x'_i)_j]\}+u_i{}^{m'(i)+1}(x'_i)_{m'(i)-1} \in F^v$ and outputs the verification value $vd_i$. In this case, the processing in Step S2251 described above is not executed.

Then, the following processing is executed depending on Processing I or Processing II. If the checksum $c_i$ has been reconstructed (Processing I), the determination unit 226 determines in Step S2261 whether $c_i = vc_i$ is satisfied for all $i = 0, ..., N-1$. The processing in Step S2262 is not executed in this case. If a determination is made that $c_i \ne vc_i$ for any i, the control unit 128 makes the processing terminate with an error message (Step S2263). On the other hand, if a determination is made that $c_i = vc_i$ is satisfied for all $i = 0, ..., N-1$, the procedure proceeds to Step S123. On the other hand, if the checksum $d_i$ has been reconstructed (Processing II), the determination unit 226 determines in Step S2262 whether $d_i = vd_i$ is satisfied for all $i = 0, ..., N-1$. The processing in Step S2261 is not executed in this case. If a determination is made that $d_i \ne vd_i$ for any i, the control unit 128 makes the processing terminate with an error message (Step S2263). On the other hand hand, if a determination is made that $d_i = vd_i$ is satisfied for all $i = 0, ..., N-1$, the procedure proceeds to Step S123.

[Other modifications and so forth]

It is to be noted that the present invention is not limited to the foregoing embodiments. For example, the above-described various kinds of processing may be executed, in addition to being executed in chronological order in accordance with the descriptions, in parallel or individually depending on the processing power of a device that executes the processing or when necessary.

The above-described each device is embodied by execution of a predetermined program by a general- or special-purpose computer having a processor (hardware processor) such as a central processing unit (CPU), memories such as random-access memory (RAM) and read-only memory (ROM), and the like, for example. The computer may have one processor and one memory or have multiple processors and memories. The program may be installed on the computer or pre-recorded on the ROM and the like. Also, some or all of the processing units may be embodied using an electronic circuit that implements processing functions without using programs, rather than an electronic circuit (circuitry) that implements functional components by loading of programs like a CPU. An electronic circuit constituting a single device may include multiple CPUs.

When the above-described configurations are implemented by a computer, the processing details of the functions supposed to be provided in each device are described by a program. As a result of this program being executed by the computer, the above-described processing functions are implemented on the computer. The program describing the processing details can be recorded on a computer-readable recording medium. An example of the computer-readable recording medium is a non-transitory recording medium. Examples of such a recording medium include a magnetic recording device, an optical disk, a magneto-optical recording medium, and semiconductor memory.

The distribution of this program is performed by, for example, selling, transferring, or lending a portable recording medium such as a DVD or a CD-ROM on which the program is recorded. Furthermore, a configuration may be adopted in which this program is distributed by storing the program in a storage device of a server computer and transferring the program to other computers from the server computer via a network.

The computer that executes such a program first, for example, temporarily stores the program recorded on the portable recording medium or the program transferred from the server computer in a storage device thereof. At the time of execution of processing, the computer reads the program stored in the storage device thereof and executes the processing in accordance with the read program. As another mode of execution of this program, the computer may read the program directly from the portable recording medium and execute the processing in accordance with the program and, furthermore, every time the program is transferred to the computer from the server computer, the computer may sequentially execute the processing in accordance with the received program. A configuration may be adopted in which the transfer of a program to the computer from the server computer is not performed and the above-described processing is executed by so-called application service provider (ASP)-type service by which the processing functions are implemented only by an instruction for execution thereof and result acquisition.

Instead of executing a predetermined program on the computer to implement the processing functions of the present devices, at least some of the processing functions may be implemented by hardware.

[DESCRIPTION OF REFERENCE NUMERALS]

1 secure computation system
11-$A_i$, 21-$A_i$ share generating device
12, 22 reconstructing device

**Claims**

1. A share generating device (11-Ai, 21-$A_i$) that is a share generating device $A_i$ included in N share generating devices $A_0$, ..., $A_{N-1}$, wherein

N is an integer greater than or equal to 2, m is an integer greater than or equal to 1, m(i) is an integer greater than w(i(+)) and less than m, m(i(-)) is an integer greater than w(i) and less than m, w(i) is an integer greater than or equal to 1 and less than m, i = 0, ..., N-1 holds, j = 0, ..., N-1 holds, i(+) = i+1 mod N holds, i(-) = i-1 mod N holds, $P_{m(i)}$ is a function, and a range of the function $P_{m(i)}$ belongs to a set $F^{m(i)}$ whose members are sequences of m(i) elements of field F, and
$\alpha = \lambda(i, i(-))[\alpha]_i + \lambda(i(-), i)[\alpha]_{i(-)}$ and $\alpha = \lambda(i, i(+))[\alpha]_i + \lambda(i(+), i)[\alpha]_{i(+)}$ hold, where $\alpha$ is a reconstructed value, $[\alpha]_i$, $[\alpha]_{i(-)}$ and $[\alpha]_{i(+)}$ are shares in accordance with Shamir's secret sharing scheme, and $\lambda(i, i(-))$, $\lambda(i(-), i)$, $\lambda(i, i(+))$ and $\lambda(i(+), i)$ are Lagrange coefficients,
the share generating device (11-Ai, 21-$A_i$) is **characterized in that**:

a share $[x]_i \in F^m$ of plaintext x in accordance with Shamir's secret sharing scheme is divided by secure computation into N shares $[x_0]_i$, ..., $[x_{N-1}]_i$ which satisfy m = m(0)+...+m(N-1) and $[x_j]_i \in F^{m(j)}$ where $F^m$ represents a set whose members are sequences of m elements of field F, and
the share generating device (11-$A_i$, 21-$A_i$) includes

a function operation unit (113-$A_i$) adapted to obtain a function value $r_i = P_{m(i(-))}(s_i) \in F^{m(i(-))}$ of an input seed $s_i \in F^{w(i)}$ wherein the amount of data of the seed $s_i$ is smaller than the amount of data of the function value $r_i$,
a first secure computation unit (114-Ai) adapted to obtain a first calculated value $\zeta_i = \lambda(i, i(-))[x_{i(-)}]_i + r_i \in F^{m(i(-))}$ using the Lagrange coefficient $\lambda(i, i(-))$, a share $[x_{i(-)}]_i$, and the function value $r_i$,
an output unit (118-Ai) adapted to output the first calculated value $\zeta_i$ to the share generating device $A_{i(-)}$,
an input unit (118-Ai) adapted to accept a second calculated value $\zeta_{i(+)} \in F^{m(i)}$,
a second secure computation unit (115-$A_i$) adapted to obtain a third calculated value $z_i = \lambda(i, i(+))[x_i]_i + \zeta_{i(+)} \in F^{m(i)}$ using the Lagrange coefficient $\lambda(i, i(+))$, the share $[x_i]_i$, and the second calculated value $\zeta_{i(+)}$, and
a share generation unit (116-Ai, 216-$A_i$) adapted to obtain a share $SS_i$ containing the seed $s_i$ and the third calculated value $z_i$, the share $SS_i$ being a share of the plaintext x in secret sharing, and output

the share $SS_i$.

2. The share generating device (21-$A_i$) according to Claim 1, wherein

N is an integer greater than or equal to 3, i(++) = i+2 mod N holds, i(--) = i-2 mod N holds, $\delta = 0, ..., N-1$ holds, v is an integer greater than or equal to 1, ceil is a ceiling function, the share $[x_j]_i$ can be divided into m(j) shares $[(x_j)_0]_i, ..., [(x_j)_{m(j)-1}]_i \in F$, m'(i) is ceil(m(i)/v), and $[(x'_\delta)_j]_i$ is $([(x_\delta)_{vj}]_i, [(x_\delta)_{vj+1}]_i, ..., [(x_\delta)_{v(j+1)-1}]_i) \in F^v$ belonging to a set $F^v$,
the share generating device (21-$A_i$) includes

a joint possession unit (215-$A_i$) adapted to possess an arbitrary value $t_{i(--)} \in F^v$ jointly with a share generating device $A_{i(--)}$ and an arbitrary value $t_i \in F^v$ jointly with a share generating device $A_{i(++)}$ and/or possess an arbitrary value $u_{i(--)} \in F^v$ jointly with a share generating device $A_{i(+)}$ and an arbitrary value $u_{i(-)} \in F^v$ jointly with the share generating device $A_{i(-)}$,
a first checksum generation unit (218-$A_i$) adapted to obtain a checksum $c_{i(--), i} = \Sigma_{0 \leq j < m'(i(--))}\{t_{i(--)}{}^{j+1}[(x'_{i(--)})_j]_i\}$ $+t_{i(--)}{}^{m'(i(--))+1}[(x'_{i(--)})_{m'(i(--))-1}]_i \in F^v$ when joint possession of the arbitrary value $t_{i(--)}$ has been performed by the joint possession unit (215-$Ai$) and obtain a checksum $d_{i(--), i} = \Sigma_{0 \leq j < m'(i(--))}\{u_{i(--)}{}^{j+1}[(x'_{i(--)})_j]_i\}$ $+u_{i(--)}{}^{m'(i(--))+1}[(x'_{i(--)})_{m'(i(--))-1}]_i \in F^v$ when joint possession of the arbitrary value $u_{i(--)}$ has been performed by the joint possession unit (215-$Ai$), and
a second checksum generation unit (219-$A_i$) adapted to obtain a checksum $c_{i, i} = \Sigma_{0 \leq j < m'(i)}\{t_i{}^{j+1}[(x'_i)_j]_i\}$ $+t_i{}^{m'(i)+1}[(x'_i)_{m'(i)-1}]_i \in F^v$ when joint possession of the arbitrary value $t_i$ has been performed by the joint possession unit (215-$A_i$) and obtain a checksum $d_{i(-), i} = \Sigma_{0 \leq j < m'(i(-))}\{u_{i(-)}{}^{j+1}[(x'_{i(-)})_j]_i\}+u_{i(-)}{}^{m'(i(-))+1}[(x'_{i(-)})_{m'(i(-))-1}]_i$ $\in F^v$ when joint possession of the arbitrary value $u_{i(-)}$ has been performed by the joint possession unit (215-$A_i$),
when joint possession of the arbitrary value $t_{i(--)}$ and the arbitrary value $t_i$ has been performed by the joint possession unit (215-$A_i$), the share $SS_i$, which is generated by the share generation unit (216-$A_i$), further contains the arbitrary value $t_{i(--)}$, the arbitrary value $t_i$, the checksum $c_{i(--), i}$, and the checksum $c_{i, i}$, and
when joint possession of the arbitrary value $u_{i(--)}$ and the arbitrary value $u_{i(-)}$ has been performed by the joint possession unit (215-$A_i$), the share $SS_i$, which is generated by the share generation unit (216-$A_i$), further contains the arbitrary value $u_{i(--)}$, the arbitrary value $u_{i(-)}$, the checksum $d_{i(--), i}$, and the checksum $d_{i(-), i}$.

3. A reconstructing device (12, 22), wherein

N is an integer greater than or equal to 2, m is an integer greater than or equal to 1, m(i) is an integer greater than w(i(+)) and less than m, m(i(-)) is an integer greater than w(i) and less than m, w(i) is an integer greater than or equal to 1 and less than m, m = m(0)+...+m(N-1) holds, i = 0, ..., N-1 holds, i(+) = i+1 mod N holds, $P_{m(i)}$ is a function, and a range of the function $P_{m(i)}$ belongs to a set $F^{m(i)}$ whose members are sequences of m(i) elements of field F, and
the reconstructing device (12, 22) is **characterized by** including

an input unit (121, 221) adapted to accept N shares $SS_0, ..., SS_{N-1}$, where each share $SS_i$ contains $z_i \in F^{m(i)}$ and $s_i \in F^{w(i)}$,
an arithmetic unit (122) adapted to obtain a member $x_i = z_i - P_{m(i)}(s_{i(+)}) \in F^{m(i)}$ using a third calculated value $z_i \in F^{m(i)}$ contained in a share $SS_i$ and a seed $s_{i(+)} \in F^{w(i(+))}$ contained in a share $SS_{i(+)}$ wherein the amount of data of the seed $s_{i(+)}$ is smaller than the amount of data of a function value $P_{m(i)}(s_{i(+)})$, and
a concatenation unit (123) adapted to obtain a reconstructed value $x \in F^m$ which is expressed by members $x_0, ..., x_{N-1}$ obtained in the arithmetic unit where $F^m$ represents a set whose members are sequences of m elements of field F.

4. The reconstructing device (22) according to Claim 3, wherein

N is an integer greater than or equal to 3, v is an integer greater than or equal to 1, ceil is a ceiling function, the member $x_i \in F^{m(i)}$ can be divided into m(i) sub-members $(x_i)_0, ..., (x_i)_{m(i)-1} \in F$, m'(i) is ceil(m(i)/v), $(x'_i)_j$ is $((x_i)_{vj}, (x_i)_{vj+1}, ..., (x_i)_{v(j+i)-1}) \in F^v$ belonging to a set $F^v$, and the share $SS_i$ further contains an arbitrary value $t_{i(--)}$, an arbitrary value $t_i$, a checksum $c_{i(--), i}$, and a checksum $c_{i, i}$ and/or an arbitrary value $u_{i(--)}$, an arbitrary value $u_{i(-)}$, a checksum $d_{i(--), i}$, and a checksum $d_{i(-), i}$, and
the reconstructing device (22) includes

a reconstruction unit (224) adapted to reconstruct, when the share $SS_i$ contains the checksum $c_{i, i}$ and a

share $SS_{i(++)}$ contains a checksum $c_{i, i(++)}$, a checksum c; using the checksum $c_{i, i}$ and the checksum $c_{i, i(++)}$ as shares in accordance with Shamir's secret sharing scheme and reconstruct, when the share $SS_{i(+)}$ contains a checksum $d_{i, i(+)}$ and the share $SS_{i(++)}$ contains a checksum $d_{i, i(++)}$, a checksum $d_i$ using the checksum $d_{i, i(+)}$ and the checksum $d_{i, i(++)}$ as shares in accordance with Shamir's secret sharing scheme, a verification value generation unit (225) adapted to obtain, when the checksum c; has been reconstructed, a verification value $vc_i = \sum_{0 \leq j < m'(i)} \{t_i^{j+1}(x'_i)_j\} + t_i^{m'(1)+1}(x'_i)_{m'(i)-1} \in F^v$ and obtain, when the checksum $d_i$ has been reconstructed, a verification value $vd_i = \sum_{0 \leq j < m'(i)} \{u_i^{j+1}(x'_i)_j\} + u_i^{m'(1)+1}(x'_i)_{m'(i)-1} \in F^v$, and

a determination unit (226) adapted to determine whether $c; = vc_i$ is satisfied when the checksum c; has been reconstructed and determine whether $d_i = vd_i$ is satisfied when the checksum $d_i$ has been reconstructed.

5. A secure computation system (1, 2) comprising:

   a reconstructing device (12, 22); and
   N share generating devices $A_0$, ..., $A_{N-1}$ (11-$A_i$, 21-$A_i$), wherein
   N is an integer greater than or equal to 2, m is an integer greater than or equal to 1, m(i) is an integer greater than w(i(+)), m(i(-)) is an integer greater than w(i) and less than m, w(i) is an integer greater than or equal to 1 and less than m, and less than m, i = 0, ..., N-1 holds, j = 0, ..., N-1 holds, i(+) = i+1 mod N holds, i(-) = i-1 mod N holds, $P_{m(i)}$ is a function, and a range of the function $P_{m(i)}$ belongs to a set $F^{m(i)}$ whose members are sequences of m(i) elements of field F, and
   $\alpha = \lambda(i, i(-))[\alpha]_i + \lambda(i(-), i)[\alpha]_{i(-)}$ and $\alpha = \lambda(i, i(+))[\alpha]_i + \lambda(i(+), i)[\alpha]_{i(+)}$ hold, where $\alpha$ is a reconstructed value, $[\alpha]_i$, $[\alpha]_{i(-)}$ and $[\alpha]_{i(+)}$ are shares in accordance with Shamir's secret sharing scheme, and $\lambda(i, i(-))$, $\lambda(i(-), i)$, $\lambda(i, i(+))$ and $\lambda(i(+), i)$ are Lagrange coefficients,
   the secure computation system (1, 2) is **characterized in that:**

      a share $[x]_i \in F^m$ of plaintext x in accordance with Shamir's secret sharing scheme is divided by secure computation into N shares $[x_0]_i$, ..., $[x_{N-1}]_i$ which satisfy m = m(0)+...+m(N-1) and $[x_j]_i \in F^{m(j)}$ where $F^m$ represents a set whose members are sequences of m elements of field F,
      a share generating device $A_i$ (11-$A_i$, 21-$A_i$) included in the N share generating devices $A_0$, ..., $A_{N-1}$ includes

         a function operation unit (113-$A_i$) adapted to obtain a function value $r_i = P_{m(i(-))}(s_i) \in F^{m(i(-))}$ of an input seed s; $\in F^{w(i)}$ wherein the amount of data of the seed $s_i$ is smaller than the amount of data of the function value r;,
         a first secure computation unit (114-$A_i$) adapted to obtain a first calculated value $\zeta_i = \lambda(i, i(-))[x_{i(-)}]_i + r_i \in F^{m(i(-))}$ using the Lagrange coefficient $\lambda(i, i(-))$, a share $[x_{i(-)}]_i$, and the function value r;,
         an output unit (118-$A_i$) adapted to output the first calculated value $\zeta_i$ to the share generating device $A_{i(-)}$,
         a first input unit (118-$A_i$) adapted to accept a second calculated value $\zeta_{i(+)} \in F^{m(i)}$,
         a second secure computation unit (115-$A_i$) adapted to obtain a third calculated value z; $= \lambda(i, i(+))[x_i]_i + \zeta_{i(+)} \in F^{m(i)}$ using the Lagrange coefficient $\lambda(i, i(+))$, the share [x;];, and the second calculated value $\zeta_{i(+)}$, and
         a share generation unit (116-$A_i$, 216-$A_i$) adapted to obtain a share $SS_i$ containing the seed s; and the third calculated value $z_i$, the share $SS_i$ being a share of the plaintext x in secret sharing, and output the share $SS_i$, and

      the reconstructing device (12, 22) includes

         a second input unit (121, 221) adapted to accept N shares $SS_0$, ..., $SS_{N-1}$, where each share $SS_i$ contains $z_i \in F^{m(i)}$ and $s_i \in F^{w(i)}$,
         an arithmetic unit (122) adapted to obtain a member x; $= z_i - P_{m(i)}(s_{i(+)}) \in F^{m(i)}$ using the third calculated value $z_i \in F^{m(i)}$ contained in the share $SS_i$ and a seed $s_{i(+)}$ contained in a share $SSi(+)$, and
         a concatenation unit (123) adapted to obtain a reconstructed value $x \in F^m$ which is expressed by members $x_0$, ..., $x_{N-1}$ obtained in the arithmetic unit.

6. A share generation method of a share generating device $A_i$ included in N share generating devices $A_0$, ..., $A_{N-1}$, wherein

   N is an integer greater than or equal to 2, m is an integer greater than or equal to 1, m(i) is an integer greater than w(i(+)) and less than m, m(i(-)) is an integer greater than w(i) and less than m, w(i) is an integer greater than or equal to 1 and less than m, i = 0, ..., N-1 holds, j = 0, ..., N-1 holds, i(+) = i+1 mod N holds, i(-) = i-1 mod

N holds, $P_{m(i)}$ is a function, and a range of the function $P_{m(i)}$ belongs to a set $F^{m(i)}$ whose members are sequences of m(i) elements of field F, and

$\alpha = \lambda(i, i(-))[\alpha]_i + \lambda(i(-), i)[\alpha]_{i(-)}$ and $\alpha = \lambda(i, i(+))[\alpha]_i + \lambda(i(+), i)[\alpha]_{i(+)}$ hold, where $\alpha$ is a reconstructed value, $[\alpha]_i$, $[\alpha]_{i(-)}$ and $[\alpha]_{i(+)}$ are shares in accordance with Shamir's secret sharing scheme, and $\lambda(i, i(-))$, $\lambda(i(-), i)$, $\lambda(i, i(+))$ and $\lambda(i(+), i)$ are Lagrange coefficients,

the share generation method is **characterized in that:**

a share $[x]_i \in F^m$ of plaintext x in accordance with Shamir's secret sharing scheme is divided by secure computation into N shares $[x_0]_i, ..., [x_{N-1}]_i$ which satisfy m = m(0)+...+m(N-1) and $[x_j]_i \in F^{m(j)}$ where $F^m$ represents a set whose members are sequences of m elements of field F, and the share generation method includes

a function operation step in which a function operation unit obtains a function value $r_i = P_{m(i(-))}(s_i) \in F^{m(i(-))}$ of an input seed $s_i \in F^{w(i)}$ wherein the amount of data of the seed $s_i$ is smaller than the amount of data of the function value $r_i$,

a first secure computation step in which a first secure computation unit obtains a first calculated value $\zeta_i = \lambda(i, i(-))[x_{i(-)}]_i + r_i \in F^{m(i(-))}$ using the Lagrange coefficient $\lambda(i, i(-))$, a share $[x_{i(-)}]_i$, and the function value $r_i$,

an output step in which an output unit outputs the first calculated value $\zeta_i$ to the share generating device $A_{i(-)}$,

an input step in which an input unit accepts a second calculated value $\zeta_{i(+)} \in F^{m(i)}$,

a second secure computation step in which a second secure computation unit obtains a third calculated value $z_i = \lambda(i, i(+))[x_i]_i + \zeta_{i(+)} \in F^{m(i)}$ using the Lagrange coefficient $\lambda(i, i(+))$, the share $[x_i]_i$, and the second calculated value $\zeta_{i(+)}$, and

a share generation step in which a share generation unit obtains a share $SS_i$ containing the seed $s_i$ and the third calculated value $z_i$, the share $SS_i$ being a share of the plaintext x in secret sharing, and outputs the share $SS_i$.

7. A reconstruction method, wherein

N is an integer greater than or equal to 2, m is an integer greater than or equal to 1, m(i) is an integer greater than w(i(+)) and less than m, m(i(-)) is an integer greater than w(i) and less than m, w(i) is an integer greater than or equal to 1 and less than m, m = m(0)+...+m(N-1) holds, i = 0, ..., N-1 holds, i(+) = i+1 mod N holds, $P_{m(i)}$ is a function, and a range of the function $P_{m(i)}$ belongs to a set $F^{m(i)}$ whose members are sequences of m(i) elements of field F, and

the reconstruction method is **characterized by** including

an input step in which an input unit accepts N shares $SS_0, ..., SS_{N-1}$, where each share $SS_i$ contains $z_i \in F^{m(i)}$ and $s_i \in F^{w(i)}$,

an arithmetic step in which an arithmetic unit obtains a member $x_i = z_i - P_{m(i)}(s_{i(+)}) \in F^{m(i)}$ using a third calculated value $z_i \in F^{m(i)}$ contained in a share $SS_i$ and a seed $s_{i(+)} \in F^{w(i(+))}$ contained in a share $SS_{i(+)}$ wherein the amount of data of the seed $s_{i(+)}$ is smaller than the amount of data of a function value $P_{m(i)}(s_{i(+)})$, and

a concatenation step in which a concatenation unit obtains a reconstructed value $x \in F^m$ which is expressed by members $x_0, ..., x_{N-1}$ obtained in the arithmetic unit where $F^m$ represents a set whose members are sequences of m elements of field F.

8. A program which, when executed on a computer, makes said computer function as the share generating device according to Claim 1 or 2 or the reconstructing device according Claim3 or 4.

9. A computer-readable recording medium that stores a program which, when executed on a computer, makes said computer function as the share generating device according to Claim 1 or 2 or the reconstructing device according to Claim 3 or 4.

**Patentansprüche**

1. Vorrichtung zum Erzeugen von Anteilen (11-$A_i$, 21-$A_i$), welche eine Vorrichtung zum Erzeugen von Anteilen $A_i$ ist,

welche in N Vorrichtungen zum Erzeugen von Anteilen $A_0$, ..., $A_{N-1}$ enthalten ist, wobei

N eine ganze Zahl größer oder gleich 2 ist, m eine ganze Zahl größer oder gleich 1 ist, m(i) eine ganze Zahl größer als w(i(+)) und kleiner als m ist, m(i(-)) eine ganze Zahl größer als w(i) und kleiner als m ist, w(i) eine ganze Zahl größer oder gleich 1 und kleiner als m ist, i = 0, ..., N-1 gilt, j = 0, ..., N-1 gilt, i (+) = i+1 mod N gilt, i(-) = i-1 mod N gilt, $P_{m(i)}$ eine Funktion ist und ein Bereich der Funktion $P_{m(i)}$ zu einer Menge $F^{m(i)}$ gehört, deren Elemente Sequenzen von m(i) Elementen des Felds F sind, und

$\alpha = \lambda(i, i(-))[\alpha]_i + \lambda(i(-), i)[\alpha]_{i(-)}$ und $\alpha = \lambda(i, i(+))[\alpha]_i + \lambda(i(+), i)[\alpha]_{i(+)}$ gilt, wobei $\alpha$ ein wiederhergestellter Wert ist, $[\alpha]_i$, $[\alpha]_{i(-)}$ und $[\alpha]_{i(+)}$ Anteile gemäß dem Geheimnisteilungsschema nach Shamir sind und $\lambda(i, i(-))$, $\lambda(i(-), i)$, $\lambda(i, i(+))$ und $\lambda(i(+), i)$ Lagrange-Koeffizienten sind,

die Vorrichtung zum Erzeugen von Anteilen (11-$A_i$, 21-$A_i$) **dadurch gekennzeichnet ist, dass**:

ein Anteil $[x]_i \in F^m$ von x in Klartext gemäß dem Geheimnisteilungsschema nach Shamir durch sichere Berechnung in N Anteile $[x_0]_i$, ..., $[x_{N-1}]_i$ geteilt wird, welche m = m(0)+...+m(N-1) und $[x_j]_i \in F^{m(j)}$ erfüllen, wobei $F^m$ eine Menge repräsentiert, deren Elemente Sequenzen von m Elementen des Felds F sind, und die Vorrichtung zum Erzeugen von Anteilen (11-$A_i$, 21-$A_i$) Folgendes umfasst

eine Funktionsoperationseinheit (113-$A_i$), welche eingerichtet ist, um einen Funktionswert $r_i = P_{m(i(-))}(s_i) \in F^{m(i(-))}$ eines eingegebenen Keims $s_i \in F^{w(i)}$ zu ermitteln, wobei die Datenmenge des Keims $s_i$ kleiner ist als die Datenmenge des Funktionswerts $r_i$,

eine erste sichere Berechnungseinheit (114-$A_i$), welche eingerichtet ist, um einen ersten berechneten Wert $\zeta_i = \lambda(i, i(-))[x_{i(-)}]_i + r_i \in F^{m(i(-))}$ unter Verwendung des Lagrange Koeffizienten $\lambda(i, i(-))$, eines Anteils $[x_{i(-)}]_i$ und des Funktionswerts $r_i$ zu ermitteln,

eine Ausgabeeinheit (118-$A_i$), welche eingerichtet ist, um den ersten berechneten Wert $\zeta_i$ an die Vorrichtung zum Erzeugen von Anteilen $A_{i(-)}$ auszugeben,

eine Eingabeeinheit (118-$A_i$), welche eingerichtet ist, um einen zweiten berechneten Wert $\zeta_{i(+)} \in F^{m(i)}$ zu akzeptieren,

eine zweite sichere Berechnungseinheit (115-$A_i$), welche eingerichtet ist, um einen dritten berechneten Wert $z_i = \lambda(i, i(+))[x_i]_i + \zeta_{i(+)} \in F^{m(i)}$ unter Verwendung des Lagrange Koeffizienten $\lambda(i, i(+))$, des Anteils $[x_i]_i$ und des zweiten berechneten Werts $\zeta_{i(+)}$ zu ermitteln, und

eine Anteileerzeugungseinheit (116-$A_i$, 216-$A_i$), welche eingerichtet ist, um einen Anteil $SS_i$ zu ermitteln, welcher den Keim $s_i$ und den dritten berechneten Wert $z_i$ enthält, wobei der Anteil $SS_i$ ein Anteil von x in Klartext beim Geheimnisteilen ist, und den Anteil $SS_i$ auszugeben.

2. Vorrichtung zum Erzeugen von Anteilen (21-$A_i$) nach Anspruch 1, wobei

N eine ganze Zahl größer oder gleich 3 ist, i(++) = i+2 mod N gilt, i(--) = i-2 mod N gilt, δ = 0, ..., N-1 gilt, v eine ganze Zahl größer oder gleich 1 ist, ceil eine Genzwertfunktion ist, der Anteil $[x_j]_i$ in m(j) Anteile $[(x_j)_0]_i$, ..., $[(x_j)_{m(j)-1}]_i \in F$ aufgeteilt werden kann, m' (i) gleich ceil (m(i) /v) ist und $[(x'_\delta)_j]_i$ gleich $([(x_\delta)_{vj}]_i, [(x_\delta)_{vj+1}]_i, ..., [(x_\delta)_{v(j+1)-1}]_i) \in F^v$ ist, welches zu einer Menge $F^v$ gehört,

die Vorrichtung zum Erzeugen von Anteilen (21-$A_i$) Folgendes umfasst

eine Gemeinsambesitzeinheit (215-$A_i$), welche eingerichtet, um einen beliebigen Wert $t_{i(--)} \in F^v$ gemeinsam mit einer Vorrichtung zum Erzeugen von Anteilen $A_{i(--)}$ und einen beliebigen Wert $t_i \in F^v$ gemeinsam mit einer Vorrichtung zum Erzeugen von Anteilen $A_{i(++)}$ zu besitzen und/oder einen beliebigen Wert $u_{i(-)} \in F^v$ gemeinsam mit einer Vorrichtung zum Erzeugen von Anteilen $A_{i(+)}$ und einen beliebigen Wert $u_{i(-)} \in F^v$ gemeinsam mit der Vorrichtung zum Erzeugen von Anteilen $A_{i(-)}$ zu besitzen,

eine erste Prüfsummenerzeugungseinheit (218-$A_i$), welche eingerichtet ist, um eine Prüfsumme Ci(--), i = $\sum_{0 \leq j < m'(i(--))} \{t_{i(--)}^{j+1}[(x'_{i(--)})_j]_i\} + t_{i(--)}^{m'(i(--))+1}[(x'_{i(--)})_{m'(i(--))-1}]_i \in F^v$ zu ermitteln, wenn ein gemeinsamer Besitz des beliebigen Werts $t_{i(-)}$ von der Gemeinsambesitzeinheit (215-$A_i$) durchgeführt wurde, und

eine Prüfsumme $d_{i(-), i} = \sum_{0 \leq j < m'(i(--))} \{u_{i(--)}^{j+1}[(x'_{i(--)})_j]_i\} + u_{i(--)}^{m'(i(--))+1}[(x'_{i(--)})_{m'(i-)-1}]_i \in F^v$ zu ermitteln, wenn ein gemeinsamer Besitz des beliebigen Werts $u_{i(--)}$ von der Gemeinsambesitzeinheit (215-$A_i$) durchgeführt wurde, und

eine zweite Prüfsummenerzeugungseinheit (219-$A_i$), welche eingerichtet ist, um eine Prüfsumme $c_{i, i} = \sum_{0 \leq j < m'(i)} \{t_i^{j+1}[(x'_i)_j]_i\} + t_i^{m'(i)+1}[(x'_i)_{m'(i)-1}]_i \in F^v$ zu ermitteln, wenn ein gemeinsamer Besitz des beliebigen Werts $t_i$ von der Gemeinsambesitzeinheit (215-$A_i$) durchgeführt wurde, und eine Prüfsumme $d_{i(-), i} = \sum_{0 \leq j < m'(i(-))} \{u_{i(-)}^{j+1}[(x'_{i(-)})_j]_i\} + u_{i(-)}^{m'(i(-))+1}[(x'_{i(-)})_{m'(i(-))-1}]_i \in F^v$ zu ermitteln, wenn ein gemeinsamer Besitz des beliebigen Werts $u_{i(-)}$ von der Gemeinsambesitzeinheit (215-$A_i$) durchgeführt wurde, und

wenn gemeinsamer Besitz des beliebigen Werts $t_{i(--)}$ und des beliebigen Werts $t_i$ von der Gemeinsambesitzeinheit (215-$A_i$) durchgeführt wurde, der Anteil $SS_i$, welcher durch die Anteileerzeugungseinheit (216-$A_i$) erzeugt

wird, weiterhin den beliebigen Wert $t_{i(--)}$, den beliebigen Wert $t_i$, die Prüfsumme $c_{i(--),\ i}$ und die Prüfsumme $c_{i,\ i}$ enthält, und

wenn gemeinsamer Besitz des beliebigen Werts $u_{i(--)}$ und des beliebigen Werts $u_{i(-)}$ von der Gemeinsambesitzeinheit (215-A$_i$) durchgeführt wurde, der Anteil SS$_i$, welcher durch die Anteileerzeugungseinheit (216-A$_i$) erzeugt wird, weiterhin den beliebigen Wert $u_{i(--)}$, den beliebigen Wert $u_{i(-)}$, die Prüfsumme $d_{i(--),\ i}$ und die Prüfsumme $d_{i(-),\ i}$ enthält.

3.  Wiederherstellungsvorrichtung (12, 22), wobei

N eine ganze Zahl größer oder gleich 2 ist, m eine ganze Zahl größer oder gleich 1 ist, m(i) eine ganze Zahl größer als w(i(+)) und kleiner als m ist, m(i(-)) eine ganze Zahl größer als w(i) und kleiner als m ist, w(i) eine ganze Zahl größer oder gleich 1 und kleiner als m ist, m = m(0)+...+m(N-1) gilt, i = 0, ..., N-1 gilt, i (+) = i+1 mod N gilt, P$_{m(i)}$ eine Funktion ist und ein Bereich der Funktion P$_{m(i)}$ zu einer Menge F$^{m(i)}$ gehört, deren Elemente Sequenzen von m(i) Elementen des Felds F sind, und

die Wiederherstellungsvorrichtung (12, 22) **dadurch gekennzeichnet ist, dass** sie Folgendes umfasst eine Eingabeeinheit (121, 221), welche eingerichtet ist, um N Anteile SS$_0$, ..., SS$_{N-1}$ zu akzeptieren, wobei jeder Anteil SS$_i$ $z_i \in$ F$^{m(i)}$ und $s_i$ E F$^{w(i)}$ enthält,

eine Arithmetikeinheit (122), welche eingerichtet ist, um ein Element $x_i = z_i - P_{m(i)}(s_{i(+)}) \in$ F$^{m(i)}$ unter Verwendung eines dritten berechneten Werts $z_i$ E F$^{m(i)}$, welcher in einem Anteil SS$_i$ enthalten ist, und eines Keims $s_{i(+)}$ E F$^{w(i(+))}$ zu ermitteln, welcher in einem Anteil SS$_{i(+)}$ enthalten ist, wobei die Datenmenge des Keims $s_{i(+)}$ kleiner ist als die Datenmenge eines Funktionswerts $P_{m(i)}(s_{i(+)})$, und

eine Verkettungseinheit (123), welche eingerichtet ist, um einen wiederhergestellten Wert $x \in$ F$^m$ zu ermitteln, welcher durch Elemente $x_0$, ..., $x_{N-1}$ ausgedrückt ist, welche in der Arithmetikeinheit ermittelt werden, wobei F$^m$ eine Menge repräsentiert, deren Elemente Sequenzen aus m Elementen des Felds F sind.

4.  Wiederherstellungsvorrichtung (22) nach Anspruch 3, wobei

N eine ganze Zahl größer oder gleich 3 ist, v eine ganze Zahl größer oder gleich 1 ist, ceil eine Genzwertfunktion ist, das Element $x_i \in$ F$^{m(i)}$ in m(i) Subelemente $(x_i)_0$, ..., $(x_i)_{m(i)-1} \in$ F aufgeteilt werden kann, m'(i) gleich ceil (m(i) Iv) ist, $(x'_i)_j$ gleich $((x_i)_{vj}, (x_i)_{vj+1}, ..., (x_i)_{v(j+1)-1}) \in$ F$^v$ ist, welches zu einer Menge F$^v$ gehört, und der Anteil SS$_i$ weiterhin einen beliebigen Wert $t_{i(--)}$, einen beliebigen Wert $t_i$, eine Prüfsumme $c_{i(--),\ i}$ und eine Prüfsumme $c_{i,\ i}$ und/oder einen beliebigen Wert $u_{i(--)}$, einen beliebigen Wert $u_{i(-)}$, eine Prüfsumme $d_{i(--),\ i}$ und eine Prüfsumme $d_{i(-),\ i}$ enthält und

die Wiederherstellungsvorrichtung (22) Folgendes umfasst

eine Wiederherstellungseinheit (224), welche eingerichtet ist, um, wenn der Anteil SS$_i$ die Prüfsumme $c_{i,\ i}$ enthält und ein Anteil SS$_{i(++)}$ eine Prüfsumme $c_{i,\ i(++)}$ enthält, eine Prüfsumme $c_i$ unter Verwendung der Prüfsumme $c_{i,\ i}$ und der Prüfsumme $c_{i,\ i(++)}$ als Anteile gemäß dem Geheimnisteilungsschema nach Shamir wiederherzustellen und, wenn der Anteil SS$_{i(+)}$ eine Prüfsumme $d_{i,\ i(+)}$ enthält und der Anteil SS$_{i(++)}$ eine Prüfsumme $d_{i,\ i(++)}$ enthält, eine Prüfsumme $d_i$ unter Verwendung der Prüfsumme $d_{i,\ i(+)}$ und der Prüfsumme $d_{i,\ i(++)}$ als Anteile gemäß dem Geheimnisteilungsschema nach Shamir wiederherzustellen,

eine Verifizierungswert-Erzeugungseinheit (225), welche eingerichtet ist, um, wenn die Prüfsumme $c_i$ wiederhergestellt wurde, einen Verifizierungswert $VC_i = \sum_{0 \leq j < m'(i)} \{t_i^{j+1}(X'_i)_j\} + t_i^{m'(i)+1}(X'_i)_{m'(i)-1} \in$ F$^v$ zu ermitteln und, wenn die Prüfsumme $d_i$ wiederhergestellt wurde, einen Verifizierungswert $vd_i = \sum_{0 \leq j < m'(i)} \{u_i^{j+1}(x'_i)_j\} + u_i^{m'(i)+1}(x'_i)_{m'(i)-1} \in$ F$^v$ zu ermitteln, und

eine Bestimmungseinheit (226), welche eingerichtet ist, um festzustellen, ob $c_i = vc_i$ erfüllt ist, wenn die Prüfsumme $c_i$ wiederhergestellt wurde, und festzustellen, ob $d_i = vd_i$ erfüllt ist, wenn die Prüfsumme $d_i$ wiederhergestellt wurde.

5.  Sicheres Berechnungssystem (1, 2), Folgendes umfassend:

eine Wiederherstellungsvorrichtung (12, 22); und

N Vorrichtungen zum Erzeugen von Anteilen A$_0$, ..., A$_{N-1}$ (11-A$_i$, 21-A$_i$), wobei

N eine ganze Zahl größer oder gleich 2 ist, m eine ganze Zahl größer oder gleich 1 ist, m(i) eine ganze Zahl größer als w(i(+)) ist, m(i(-)) eine ganze Zahl größer als w(i) und kleiner als m ist, w(i) eine ganze Zahl größer oder gleich 1 und kleiner als m ist, i = 0, ..., N-1 gilt, j = 0, ..., N-1 gilt, i (+) = i+1 mod N gilt, i(-) = i-1 mod N gilt, P$_{m(i)}$ eine Funktion ist und ein Bereich der Funktion P$_{m(i)}$ zu einer Menge F$^{m(i)}$ gehört, deren Elemente Sequenzen von m(i) Elementen des Felds F sind, und

$\alpha = \lambda(i, i(-)) [\alpha]_i + \lambda(i(-), i) [\alpha]_{i(-)}$ und $\alpha = \lambda(i, i(+)) [\alpha]_i + \lambda(i(+), i) [\alpha]_{i(+)}$ gilt, wobei $\alpha$ ein wiederhergestellter Wert ist,

$[\alpha]_i$, $[\alpha]_{i(-)}$ und $[\alpha]_{i(+)}$ Anteile gemäß dem Geheimnisteilungsschema nach Shamir sind und $\lambda(i, i(-))$, $\lambda(i(-), i)$, $\lambda(i, i(+))$ und $\lambda(i(+), i)$ Lagrange-Koeffizienten sind,

das sichere Berechnungssystem (1, 2) **dadurch gekennzeichnet ist, dass**:

ein Anteil $[x]_i \in F^m$ von x in Klartext gemäß dem Geheimnisteilungsschema nach Shamir durch sichere Berechnung in N Anteile $[x_0]_i$, ..., $[x_{N-1}]_i$ geteilt wird, welche m = m(0)+...+m(N-1) und $[x_j]_i \in F^{m(i)}$ erfüllen, wobei $F^m$ eine Menge repräsentiert, deren Elemente Sequenzen von m Elementen des Felds F sind, eine Vorrichtung zum Erzeugen von Anteilen $A_i$ (11-$A_i$, 21-$A_i$), welche in den N Vorrichtungen zum Erzeugen von Anteilen $A_0$, ..., $A_{N-1}$ enthalten ist, Folgendes umfasst

eine Funktionsoperationseinheit (113-$A_i$), welche eingerichtet ist, um einen Funktionswert $r_i = P_{m(i(-))}(s_i) \in F^{m(i(-))}$ eines eingegebenen Keims $s_i \in F^{w(i)}$ zu ermitteln, wobei die Datenmenge des Keims $s_i$ kleiner ist als die Datenmenge des Funktionswerts $r_i$,

eine erste sichere Berechnungseinheit (114-$A_i$), welche eingerichtet ist, um einen ersten berechneten Wert $\zeta_i = \lambda(i, i(-))[x_{i(-)}]_i + r_i \in F^{m(i(-))}$ unter Verwendung des Lagrange Koeffizienten $\lambda(i, i(-))$, eines Anteils $[x_{i(-)}]_i$ und des Funktionswerts $r_i$ zu ermitteln,

eine Ausgabeeinheit (118-$A_i$), welche eingerichtet ist, um den ersten berechneten Wert $\zeta_i$ an die Vorrichtung zum Erzeugen von Anteilen $A_{i(-)}$ auszugeben,

eine erste Eingabeeinheit (118-$A_i$), welche eingerichtet ist, um einen zweiten berechneten Wert $\zeta_{i(+)} \in F^{m(i)}$ zu akzeptieren,

eine zweite sichere Berechnungseinheit (115-$A_i$), welche eingerichtet ist, um einen dritten berechneten Wert $z_i = \lambda(i, i(+)) [x_i]_i + \zeta_{i(+)} \in F^{m(i)}$ unter Verwendung des Lagrange Koeffizienten $\lambda(i, i(+))$, des Anteils $[x_i]_i$ und des zweiten berechneten Werts $\zeta_{i(+)}$ zu ermitteln, und

eine Anteileerzeugungseinheit (116-$A_i$, 216-$A_i$), welche eingerichtet ist, um einen Anteil $SS_i$ zu ermitteln, welcher den Keim $s_i$ und den dritten berechneten Wert $z_i$ enthält, wobei der Anteil $SS_i$ ein Anteil von x in Klartext beim Geheimnisteilen ist, und den Anteil $SS_i$ auszugeben, und

die Wiederherstellungsvorrichtung (12, 22) Folgendes umfasst

eine zweite Eingabeeinheit (121, 221), welche eingerichtet ist, um N Anteile $SS_0$, ..., $SS_{N-1}$ zu akzeptieren, wobei jeder Anteil $SS_i$ $z_i \in F^{m(i)}$ und $s_i \in F^{w(i)}$ enthält,

eine Arithmetikeinheit (122), welche eingerichtet ist, um ein Element $x_i = z_i - P_{m(i)}(s_{i(+)}) \in F^{m(i)}$ unter Verwendung des dritten berechneten Werts $z_i \in F^{m(i)}$, welcher in dem Anteil $SS_i$ enthalten ist, und eines Keims $s_{i(+)}$ zu ermitteln, welcher in einem Anteil $SS_{i(+)}$ enthalten ist, und

eine Verkettungseinheit (123), welche eingerichtet ist, um einen wiederhergestellten Wert $x \in F^m$ zu ermitteln, welcher durch Elemente $x_0$, ..., $x_{N-1}$ ausgedrückt ist, welche in der Arithmetikeinheit ermittelt werden.

6.  Verfahren zur Erzeugung von Anteilen einer Vorrichtung zum Erzeugen von Anteilen $A_i$, welche in N Vorrichtungen zum Erzeugen von Anteilen $A_0$, ..., $A_{N-1}$ enthalten ist, wobei

N eine ganze Zahl größer oder gleich 2 ist, m eine ganze Zahl größer oder gleich 1 ist, m(i) eine ganze Zahl größer als w(i(+)) und kleiner als m ist, m(i(-)) eine ganze Zahl größer als w(i) und kleiner als m ist, w(i) eine ganze Zahl größer oder gleich 1 und kleiner als m ist, i = 0, ..., N-1 gilt, j = 0, ..., N-1 gilt, i (+) = i+1 mod N gilt, i(-) = i-1 mod N gilt, $P_{m(i)}$ eine Funktion ist und ein Bereich der Funktion $P_{m(i)}$ zu einer Menge $F^{m(i)}$ gehört, deren Elemente Sequenzen von m(i) Elementen des Felds F sind, und

$\alpha = \lambda(i, i(-)) [\alpha]_i + \lambda(i(-), i)[\alpha]_{i(-)}$ und $\alpha = \lambda(i, i(+)) [\alpha]_i + \lambda(i(+), i) [\alpha]_{i(+)}$ gilt, wobei $\alpha$ ein wiederhergestellter Wert ist, $[a]_i$, $[\alpha]_{i(-)}$ und $[\alpha]_{i(+)}$ Anteile gemäß dem Geheimnisteilungsschema nach Shamir sind und $\lambda(i, i(-))$, $\lambda(i(-), i)$, $\lambda(i, i(+))$ und $\lambda(i(+), i)$ Lagrange-Koeffizienten sind,

das Verfahren zur Erzeugung von Anteilen **dadurch gekennzeichnet ist, dass**:

ein Anteil $[x]_i \in F^m$ von x in Klartext gemäß dem Geheimnisteilungsschema nach Shamir durch sichere Berechnung in N Anteile $[x_0]_i$, ..., $[x_{N-1}]_i$ geteilt wird, welche m = m(0)+...+m(N-1) und $[x_j]_i \in F^{m(j)}$ erfüllen, wobei $F^m$ eine Menge repräsentiert, deren Elemente Sequenzen von m Elementen des Felds F sind, und das Verfahren zur Erzeugung von Anteilen Folgendes umfasst

einen Funktionsoperationsschritt, in welchem eine Funktionsoperationseinheit einen Funktionswert $r_i = P_{m(i(-))} (s_i) \in F^{m(i(-))}$ eines eingegebenen Keims $s_i \in F^{w(i)}$ ermittelt, wobei die Datenmenge des Keims $s_i$ kleiner ist als die Datenmenge des Funktionswerts $r_i$,

einen ersten sicheren Berechnungsschritt, in welchem eine erste sichere Berechnungseinheit einen ersten berechneten Wert $\zeta_i = \lambda(i, i(-)) [x_{i(-)}]_i + r_i \in F^{m(i(-))}$ unter Verwendung des Lagrange Koeffizienten $\lambda(i, i(-))$, eines Anteils $[x_{i(-)}]_i$ und des Funktionswerts $r_i$ ermittelt,

einen Ausgabeschritt, in welchem eine Ausgabeeinheit den ersten berechneten Wert $\zeta_i$ an die Vorrichtung

zum Erzeugen von Anteilen $A_{i(-)}$ ausgibt,

einen Eingabeschritt, in welchem eine Eingabeeinheit einen zweiten berechneten Wert $\zeta_{i(+)} \in F^{m(i)}$ akzeptiert,

einen zweiten sicheren Berechnungsschritt, in welchem eine zweite sichere Berechnungseinheit einen dritten berechneten Wert $z_i = \lambda(i, i(+))[x_i]_i + \zeta_{i(+)} \in F^{m(i)}$ unter Verwendung des Lagrange Koeffizienten $\lambda(i, i(+))$, des Anteils $[x_i]_i$ und des zweiten berechneten Werts $\zeta_{i(+)}$ ermittelt, und

einen Anteileerzeugungsschritt, in welchem eine Anteileerzeugungseinheit einen Anteil $SS_i$ ermittelt, welcher den Keim $s_i$ und den dritten berechneten Wert $z_i$ enthält, wobei der Anteil $SS_i$ ein Anteil von x in Klartext beim Geheimnisteilen ist, und den Anteil $SS_i$ ausgibt.

**7.** Wiederherstellungsverfahren, wobei

N eine ganze Zahl größer oder gleich 2 ist, m eine ganze Zahl größer oder gleich 1 ist, m(i) eine ganze Zahl größer als w(i(+)) und kleiner als m ist, m(i(-)) eine ganze Zahl größer als w(i) und kleiner als m ist, w(i) eine ganze Zahl größer oder gleich 1 und kleiner als m ist, m = m(0)+...+m(N-1) gilt, i = 0, ..., N-1 gilt, i (+) = i+1 mod N gilt, $P_{m(i)}$ eine Funktion ist und ein Bereich der Funktion $P_{m(i)}$ zu einer Menge $F^{m(i)}$ gehört, deren Elemente Sequenzen von m(i) Elementen des Felds F sind, und

das Wiederherstellungsverfahren **dadurch gekennzeichnet ist, dass** es Folgendes umfasst

einen Eingabeschritt, in welchem eine Eingabeeinheit N Anteile $SS_0$, ..., $SS_{N-1}$ akzeptiert, wobei jeder Anteil $SS_i$ $z_i \in F^{m(i)}$ und $s_i \in F^{w(i)}$ enthält,

einen Arithmetikschritt, in welchem eine Arithmetikeinheit ein Element $x_i = z_i - P_{m(i)}(s_{i(+)}) \in F^{m(i)}$ unter Verwendung eines dritten berechneten Werts $z_i \in F^{m(i)}$, welcher in einem Anteil $SS_i$ enthalten ist, und eines Keims $s_{i(+)} \in F^{w(i(+))}$ ermittelt, welcher in einem Anteil $SS_{i(+)}$ enthalten ist, wobei die Datenmenge des Keims $s_{i(+)}$ kleiner ist als die Datenmenge eines Funktionswerts $P_{m(i)}(s_{i(+)})$, und

einen Verkettungsschritt, in welchem eine Verkettungseinheit einen wiederhergestellten Wert $x \in F^m$ ermittelt, welcher durch Elemente $x_0$, ..., $x_{N-1}$ ausgedrückt ist, welche in der Arithmetikeinheit ermittelt werden, wobei $F^m$ eine Menge repräsentiert, deren Elemente Sequenzen aus m Elementen des Felds F sind.

**8.** Programm, welches, wenn es auf einem Computer ausgeführt wird, bewirkt, dass der Computer als die Vorrichtung zum Erzeugen von Anteilen nach Anspruch 1 oder 2 oder als die Wiederherstellungsvorrichtung nach Anspruch 3 oder 4 funktioniert.

**9.** Computerlesbares Aufzeichnungsmedium, welches ein Programm speichert, welches, wenn es auf einem Computer ausgeführt wird, bewirkt, dass der Computer als die Vorrichtung zum Erzeugen von Anteilen nach Anspruch 1 oder 2 oder als die Wiederherstellungsvorrichtung nach Anspruch 3 oder 4 funktioniert.

**Revendications**

**1.** Dispositif de génération de partie (11-$A_i$, 21-$A_i$) qui est un dispositif de génération de partie $A_i$ inclus dans N dispositifs de génération de partie $A_0$, ..., $A_{N-1}$, dans lequel

N est un entier supérieur ou égal à 2, m est un entier supérieur ou égal à 1, m(i) est un entier supérieur à w(i(+)) et inférieur à m, m(i(-)) est un entier supérieur à w(i) et inférieur à m, w(i) est un entier supérieur ou égal à 1 et inférieur à m, i = 0, ..., N-1 se vérifie, j = 0, ..., N-1 se vérifie, i (+) = i+1 mod N se vérifie, i(-) = i-1 mod N se vérifie, $P_{m(i)}$ est une fonction, et une plage de la fonction $P_{m(i)}$ appartient à un ensemble $F^{m(i)}$ dont des membres sont des séquences de m(i) éléments de champ F, et

$\alpha = \lambda(i,i(-))[\alpha]_i + \lambda(i(-),i)[\alpha]_{i(-)}$ et $\alpha = \lambda(i,i(+))[\alpha]_i + \lambda(i(+),i)[\alpha]_{i(+)}$ se vérifient, où $\alpha$ est une valeur reconstruite, $[\alpha]_i$, $[\alpha]_{i(-)}$ et $[\alpha]_{i(+)}$ sont des parties selon le système de partage de secret de Shamir, et $\lambda(i,i(-))$, $\lambda(i(-),i)$, $\lambda(i,i(+))$ et $\lambda(i(+),i)$ sont des coefficients de Lagrange,

le dispositif de génération de partie (11-$A_i$, 21-$A_i$) est **caractérisé en ce que** :

une partie $[x]_i \in F^m$ de texte en clair x selon le système de partage de secret de Shamir est divisée par calcul sécurisé en N parties $[x_0]_i$, ..., $[x_{N-1}]_i$ qui satisfont m = m(0) + ... + m(N-1) et $[x_j]_i \in F^{m(j)}$ où $F^m$ représente un ensemble dont des membres sont des séquences de m éléments de champ F, et

le dispositif de génération de partie (11-$A_i$, 21-$A_i$) inclut

une unité d'opération de fonction (113-$A_i$) apte à obtenir une valeur de fonction $r_i = P_{m(i(-))}(s_i) \in F^{m(i(-))}$ d'une amorce d'entrée $s_i \in F^{w(i)}$, dans lequel la quantité de données de l'amorce $s_i$ est inférieure à la quantité de données de la valeur de fonction $r_i$,

une première unité de calcul sécurisé (114-$A_i$) apte à obtenir une première valeur calculée $\zeta_i = \lambda(i,i(-))[x_{i(-)}]_i + r_i \in F^{m(i(-))}$ en utilisant le coefficient de Lagrange $\lambda(i,i(-))$, une partie $[x_{i(-)}]_i$, et la valeur de fonction $r_i$,

une unité de sortie (118-$A_i$) apte à délivrer la première valeur calculée $\zeta_i$ au dispositif de génération de partie $A_{i(-)}$,

une unité d'entrée (118-$A_i$) apte à accepter une deuxième valeur calculée $\zeta_{i(+)} \in F^{m(i)}$,

une deuxième unité de calcul sécurisé (115-$A_i$) apte à obtenir une troisième valeur calculée $z_i = \lambda(i,i(+))[x_i]_i + \zeta_{i(+)} \in F^{m(i)}$ en utilisant le coefficient de Lagrange $\lambda(i,i(+))$, la partie $[x_i]_i$, et la deuxième valeur calculée $\zeta_{i(+)}$, et

une unité de génération de partie (116-$A_i$, 216-$A_i$) apte à obtenir une partie $SS_i$ contenant l'amorce $s_i$ et la troisième valeur calculée $z_i$, la partie $SS_i$ étant une partie du texte en clair x dans le partage de secret, et délivrer la partie $SS_i$.

**2.** Dispositif de génération de partie (21-$A_i$) selon la revendication 1, dans lequel

N est un entier supérieur ou égal à 3, i(++) = i+2 mod N se vérifie, i(--) = i-2 mod N se vérifie, $\delta$ = 0, ..., N-1 se vérifie, v est un entier supérieur ou égal à 1, ceil est une fonction ceiling, la partie $[x_j]_i$ peut être divisée en m(j) parties , $[(x_j)_0]_i$, ..., $[(x_j)_{m(j)-1}]_i \in F$, m' (i) est ceil(m(i)/v), et $[(x'_\delta)_j]_i$ est $([(x_\delta)_{vj}]_i, [(x_\delta)_{vj+1}]_i, ..., [(x_\delta)_{v(j+1)-1}]_i) \in F^v$ appartenant à un ensemble $F^v$,

le dispositif de génération de partie (21-$A_i$) inclut

une unité de possession conjointe (215-$A_i$) apte à posséder une valeur arbitraire $t_{i(--)} \in F^v$ conjointement avec un dispositif de génération de partie $A_{i(--)}$ et une valeur arbitraire $t_i \in F^v$ conjointement avec un dispositif de génération de partie $A_{i(++)}$ et/ou posséder une valeur arbitraire $u_{i(--)} \in F^v$ conjointement avec un dispositif de génération de partie $A_{i(+)}$ et une valeur arbitraire $u_{i(-)} \in F^v$ conjointement avec le dispositif de génération de partie $A_{i(-)}$,

une première unité de génération de somme de contrôle (218-$A_i$) apte à obtenir une somme de contrôle $c_{i(--),i}$

$$= \sum_{0 \le j < m'(i(--))} \left\{ t_{i(--)}^{j+1} \left[ \left( x'_{i(--)} \right)_j \right]_i \right\} + t_{i(--)}^{m'(i(--))+1} \left[ \left( x'_{i(--)} \right)_{m'(i(--))-1} \right]_i \in F^v$$ lorsqu'une possession conjointe de la valeur arbitraire $t_{i(--)}$ a été effectuée par l'unité de possession conjointe (215-$A_i$) et obtenir une somme de contrôle $$d_{i(--),i} = \sum_{0 \le j < m'(i(--))} \left\{ u_{i(--)}^{j+1} \left[ \left( x'_{i(--)} \right)_j \right]_i \right\} +$$

$$u_{i(--)}^{m'(i(--))+1} \left[ \left( x'_{i(--)} \right)_{m'(i(--))-1} \right]_i \in F^v$$ lorsqu'une possession conjointe de la valeur arbitraire $u_{i(--)}$ a été effectuée par l'unité de possession conjointe (215-$A_i$), et

une deuxième unité de génération de somme de contrôle (219-$A_i$) apte à obtenir une somme de contrôle $c_{i,i} =$

$$\sum_{0 \le j < m'(i)} \left\{ t_i^{j+1} \left[ (x'_i)_j \right]_i \right\} + t_i^{m'(i)+1} \left[ (x'_i)_{m'(i)-1} \right]_i \in F^v$$ lorsqu'une possession conjointe de la valeur arbitraire $t_i$ a été effectuée par l'unité de possession conjointe (215-$A_i$) et obtenir une somme de contrôle

$$d_{i(-),i} = \sum_{0 \le j < m'(i(-))} \left\{ u_{i(-)}^{j+1} \left[ \left( x'_{i(-)} \right)_j \right]_i \right\} + u_{i(-)}^{m'(i(-))+1} \left[ \left( x'_{i(-)} \right)_{m'(i(-))-1} \right]_i \in F^v$$ lorsqu'une possession conjointe de la valeur arbitraire $u_{i(-)}$ a été effectuée par l'unité de possession conjointe (215-$A_i$),

lorsqu'une possession conjointe de la valeur arbitraire $t_{i(--)}$ et de la valeur arbitraire $t_i$ a été effectuée par l'unité de possession conjointe (215-$A_i$), la partie $SS_i$, qui est générée par l'unité de génération de partie (216-$A_i$), contient en outre la valeur arbitraire $t_{i(--)}$, la valeur arbitraire $t_i$, la somme de contrôle $c_{i(--),i}$ et la somme de contrôle $c_{i,i}$, et

lorsqu'une possession conjointe de la valeur arbitraire $u_{i(-)}$ et de la valeur arbitraire $u_{i(-)}$ a été effectuée par l'unité de possession conjointe (215-$A_i$), la partie $SS_i$, qui est générée par l'unité de génération de partie (216-$A_i$), contient en outre la valeur arbitraire $u_{i(--)}$, la valeur arbitraire $u_{i(-)}$, la somme de contrôle $d_{i(--),i}$ et la somme de contrôle $d_{i(-),i}$.

**3.** Dispositif de reconstruction (12, 22), dans lequel

N est un entier supérieur ou égal à 2, m est un entier supérieur ou égal à 1, $m(i)$ est un entier supérieur à $w(i(+))$ et inférieur à m, $m(i(-))$ est un entier supérieur à $w(i)$ et inférieur à m, $w(i)$ est un entier supérieur ou égal à 1 et inférieur à m, $m = m(0) + ... + m(N-1)$ se vérifie, $i = 0, ..., N-1$ se vérifie, $i(+) = i+1 \mod N$ se vérifie, , $P_{m(i)}$ est une fonction, et une plage de la fonction $P_{m(i)}$ appartient à un ensemble $F^{m(i)}$ dont des membres sont des séquences de $m(i)$ éléments de champ F, et

le dispositif de reconstruction (12, 22) est **caractérisé en ce qu'**il inclut :

une unité d'entrée (121, 221) apte à accepter N parties $SS_0, ..., SS_{N-1}$, où chaque partie $SS_i$ contient $z_i \in F^{m(i)}$ et $s_i \in F^{w(i)}$,

une unité arithmétique (122) apte à obtenir un membre $x_i = z_i - P_{m(i)}(s_{i(+)}) \in \boldsymbol{F^{m(i)}}$ en utilisant une troisième valeur calculée $z_i \in \boldsymbol{F^{m(i)}}$ contenue dans une partie $SS_i$ et une amorce $s_{i(+)} \in \boldsymbol{F^{w(i(+))}}$ contenue dans une partie $SS_{i(+)}$, dans lequel la quantité de données de l'amorce $s_{i(+)}$ est inférieure à la quantité de données d'une valeur de fonction $P_{m(i)}(S_{i(+)})$, et

une unité de concaténation (123) apte à obtenir une valeur reconstruite $\mathbf{x} \in \boldsymbol{F^m}$ qui est exprimée par des membres $x_0, ..., X_{N-1}$ obtenus dans l'unité arithmétique où $F^m$ représente un ensemble dont des membres sont des séquences de m éléments de champ F.

4.  Dispositif de reconstruction (22) selon la revendication 3, dans lequel

N est un entier supérieur ou égal à 3, v est un entier supérieur ou égal à 1, ceil est une fonction ceiling, le membre $x_i \in F$ peut être divisé en $m(i)$ sous-membres $(x_i)_0, ..., (x_i)_{m(i)-1} \in F$, m' (i) est $ceil(m(i)/v)$, $(x'_i)_j$ est $((x_i)_{vj}, (x_i)_{vj+1}, ..., (x_i)_{v(j+1)-1}) \in F^v$ appartenant à un ensemble $F^v$, et la partie $SS_i$ contient en outre une valeur arbitraire $t_{i(--)}$, une valeur arbitraire $t_i$, une somme de contrôle $c_{i(--),i}$, et une somme de contrôle $c_{i,i}$, et/ou une valeur arbitraire $u_{i(--)}$, une valeur arbitraire $u_{i(-)}$, une somme de contrôle $d_{i(--),i}$, et une somme de contrôle $d_{i(-),i}$, et le dispositif de reconstruction (22) inclut

une unité de reconstruction (224) apte à reconstruire, lorsque la partie $SS_i$ contient la somme de contrôle $c_{i,i}$ et une partie $SS_{i(++)}$ contient une somme de contrôle $c_{i,i(++)}$, une somme de contrôle $c_i$ en utilisant la somme de contrôle $c_{i,i}$ et la somme de contrôle $c_{i,i(++)}$ en tant que parties selon le système de partage de secret de Shamir et reconstruire, lorsque la partie $SS_{i(+)}$ contient une somme de contrôle $d_{i,i(+)}$ et la partie $SS_{i(++)}$ contient une somme de contrôle $d_{i,i(++)}$, une somme de contrôle $d_i$ en utilisant la somme de contrôle $d_{i,i(+)}$ et la somme de contrôle $d_{i,i(++)}$ en tant que parties selon le système de partage de secret de Shamir,

une unité de génération de valeur de vérification (225) apte à obtenir, lorsque la somme de contrôle $c_i$ a été reconstruite, une valeur de vérification $vc_i = \sum_{0 \le j < m'(i)} \{ t_i^{j+1}(x'_i)_j \} + t_i^{m'(i)+1}(x'_i)_{m'(i)-1} \in F^v$ et obtenir, lorsque la somme de contrôle $d_i$ a été reconstruite, une valeur de vérification

$$vd_i = \sum_{0 \le j < m'(i)} \{ u_i^{j+1}(x'_i)_j \} + u_i^{m'(i)+1}(x'_i)_{m'(i)-1} \in F^v, \text{ et}$$

une unité de détermination (226) apte à déterminer si $c_i = vc_i$ est ou non satisfaite lorsque la somme de contrôle $c_i$ a été reconstruite et déterminer si $d_i = vd_i$ est ou non satisfaite lorsque la somme de contrôle $d_i$ a été reconstruite.

5.  Système de calcul sécurisé (1, 2) comprenant :

un dispositif de reconstruction (12, 22) ; et
N dispositifs de génération de partie $A_0, ..., A_{N-1}$ (11-$A_i$, 21-$A_i$), dans lequel
N est un entier supérieur ou égal à 2, m est un entier supérieur ou égal à 1, $m(i)$ est un entier supérieur à $w(i(+))$, $m(i(-))$ est un entier supérieur à $w(i)$ et inférieur à m, $w(i)$ est un entier supérieur ou égal à 1 et inférieur à m, $i = 0, ..., N-1$ se vérifie, $j = 0, ..., N-1$ se vérifie, $i(+) = i+1 \mod N$ se vérifie, $i(-) = i-1 \mod N$ se vérifie, $P_{m(i)}$ est une fonction, et une plage de la fonction $P_{m(i)}$ appartient à un ensemble $F^{m(i)}$ dont des membres sont des séquences de $m(i)$ éléments de champ F, et
$\alpha = \lambda(i,i(-))[\alpha]_i + \lambda(i(-),i)[\alpha]_{i(-)}$ et $\alpha = \lambda(i,i(+))[\alpha]_i + \lambda(i(+),i)[\alpha]_{i(+)}$ se vérifient, où $\alpha$ est une valeur reconstruite, $[\alpha]_i, [\alpha]_{i(-)}$ et $[\alpha]_{i(+)}$ sont des parties selon le système de partage de secret de Shamir, et $\lambda(i,i(-)), \lambda(i(-),i), \lambda(i,i(+))$ et $\lambda(i(+),i)$ sont des coefficients de Lagrange,
le système de calcul sécurisé (1, 2) est **caractérisé en ce que** :

une partie $[x]_i \in \boldsymbol{F^m}$ de texte en clair x selon le système de partage de secret de Shamir est divisée par calcul sécurisé en N parties $[x_0]_i, ..., [x_{N-1}]_i$ qui satisfont $m = m(0) + ... + m(N-1)$ et $[x_j]_i \in F^{m(j)}$ où $F^m$ représente un ensemble dont des membres sont des séquences de m éléments de champ F,

un dispositif de génération de partie $A_i$ (11-$A_i$, 21-$A_i$) inclus dans les N dispositifs de génération de partie $A_0$, ..., $A_{N-1}$ inclut

une unité d'opération de fonction (113-$A_i$) apte à obtenir une valeur de fonction $r_i = P_{m(i(-))}(s_i) \in F^{m(i(-))}$ d'une amorce d'entrée $s_i \in F^{w(i)}$, dans lequel la quantité de données de l'amorce $s_i$ est inférieure à la quantité de données de la valeur de fonction $r_i$,

une première unité de calcul sécurisé (114-$A_i$) apte à obtenir une première valeur calculée $\zeta_i = \lambda(i,i(-))[x_{i(-)}]_i + r_i \in F^{m(i(-))}$ en utilisant le coefficient de Lagrange $\lambda(i,i(-))$, une partie $[x_{i(-)}]_i$, et la valeur de fonction $r_i$,

une unité de sortie (118-$A_i$) apte à délivrer la première valeur calculée $\zeta_i$ au dispositif de génération de partie $A_{i(-)}$,

une unité d'entrée (118-$A_i$) apte à accepter une deuxième valeur calculée $\zeta_{i(+)} \in F^{m(i)}$,

une deuxième unité de calcul sécurisé (115-$A_i$) apte à obtenir une troisième valeur calculée $z_i = \lambda(i,i(+))[x_i]_i + \zeta_{i(+)} \in F^{m(i)}$ en utilisant le coefficient de Lagrange $\lambda(i,i(+))$, la partie $[x_i]_i$, et la deuxième valeur calculée $\zeta_{i(+)}$, et

une unité de génération de partie (116-$A_i$, 216-$A_i$) apte à obtenir une partie $SS_i$ contenant l'amorce $s_i$ et la troisième valeur calculée $z_i$, la partie $SS_i$ étant une partie du texte en clair x dans le partage de secret, et délivrer la partie $SS_i$, et

le dispositif de reconstruction (12, 22) inclut

une deuxième unité d'entrée (121, 221) apte à accepter N parties $SS_0$, ..., $SS_{N-1}$, où chaque partie $SS_i$ contient $z_i \in F^{m(i)}$ et $s_i \in F^{w(i)}$,

une unité arithmétique (122) apte à obtenir un membre $x_i = z_i - P_{m(i)}(s_{i(+)}) \in F^{m(i)}$ en utilisant la troisième valeur calculée $z_i \in F^{m(i)}$ contenue dans la partie $SS_i$ et une amorce $s_{i(+)}$ contenue dans une partie $SS_{i(+)}$, et

une unité de concaténation (123) apte à obtenir une valeur reconstruite $x \in F^m$ qui est exprimée par des membres $x_0$, ..., $x_{N-1}$ obtenus dans l'unité arithmétique.

6. Procédé de génération de partie d'un dispositif de génération de partie $A_i$ inclus dans N dispositifs de génération de partie $A_0$, ..., $A_{N-1}$, dans lequel

N est un entier supérieur ou égal à 2, m est un entier supérieur ou égal à 1, m(i) est un entier supérieur à w(i(+)) et inférieur à m, m(i(-)) est un entier supérieur à w(i) et inférieur à m, w(i) est un entier supérieur ou égal à 1 et inférieur à m, i = 0, ..., N-1 se vérifie, j = 0, ..., N-1 se vérifie, i (+) = i+1 mod N se vérifie, i(-) = i-1 mod N se vérifie, $P_{m(i)}$ est une fonction, et une plage de la fonction $P_{m(i)}$ appartient à un ensemble $F^{m(i)}$ dont des membres sont des séquences de m(i) éléments de champ F, et

$\alpha = \lambda(i,i(-))[\alpha]_i + \lambda(i(-),i)[\alpha]_{i(-)}$ et $\alpha = \lambda(i,i(+))[\alpha]_i + \lambda(i(+),i)[\alpha]_{i(+)}$ se vérifient, où $\alpha$ est une valeur reconstruite, $[\alpha]_i$, $[\alpha]_{i(-)}$ et $[\alpha]_{i(+)}$ sont des parties selon le système de partage de secret de Shamir, et $\lambda(i,i(-))$, $\lambda(i(-),i)$, $\lambda(i,i(+))$ et $\lambda(i(+),i)$ sont des coefficients de Lagrange,

le procédé de génération de partie est **caractérisé en ce que** :

une partie $[x]_i \in F^m$ de texte en clair x selon le système de partage de secret de Shamir est divisée par calcul sécurisé en N parties $[x_0]_i$, ..., $[x_{N-1}]_i$ qui satisfont m = m(0) + ... + m(N-1) et $[x_j]_i \in F^{m(j)}$ où $F^m$ représente un ensemble dont des membres sont des séquences de m éléments de champ F, et

le procédé de génération de partie inclut une étape d'opération de fonction à laquelle une unité d'opération de fonction obtient une valeur de fonction $r_i = P_{m(i(-))}(s_i) \in F^{m(i(-))}$ d'une amorce d'entrée $s_i \in F^{w(i)}$, dans lequel la quantité de données de l'amorce $s_i$ est inférieure à la quantité de données de la valeur de fonction $r_i$,

une première étape de calcul sécurisé à laquelle une première unité de calcul sécurisé obtient une première valeur calculée $\zeta_i = \lambda(i,i(-))[x_{i(-)}]_i + r_i \in F^{m(i(-))}$ en utilisant le coefficient de Lagrange $\lambda(i,i(-))$, une partie $[x_{i(-)}]_i$, et la valeur de fonction $r_i$,

une étape de sortie à laquelle une unité de sortie délivre la première valeur calculée $\zeta_i$ au dispositif de génération de partie $A_{i(-)}$,

une étape d'entrée à laquelle une unité d'entrée accepte une deuxième valeur calculée $\zeta_{i(+)} \in F^{m(i)}$,

une deuxième étape de calcul sécurisé à laquelle une deuxième unité de calcul sécurisé obtient une troisième valeur calculée $z_i = \lambda(i,i(+))[x_i]_i + \zeta_{i(+)} \in F^{m(i)}$ en utilisant le coefficient de Lagrange $\lambda(i,i(+))$, la partie $[x_i]_i$, et la deuxième valeur calculée $\zeta_{i(+)}$, et

une étape de génération de partie à laquelle une unité de génération de partie obtient une partie $SS_i$ contenant l'amorce $s_i$ et la troisième valeur calculée $z_i$, la partie $SS_i$ étant une partie du texte en clair x dans le partage de secret, et délivre la partie $SS_i$.

7. Procédé de reconstruction, dans lequel

N est un entier supérieur ou égal à 2, m est un entier supérieur ou égal à 1, m(i) est un entier supérieur à w(i(+)) et inférieur à m, m(i(-)) est un entier supérieur à w(i) et inférieur à m, w(i) est un entier supérieur ou égal à 1 et inférieur à m, m = m(0) + ... + m(N-1) se vérifie, i = 0, ..., N-1 se vérifie, i (+) = i+1 mod N se vérifie, , $P_{m(i)}$ est une fonction, et une plage de la fonction $P_{m(i)}$ appartient à un ensemble $F^{m(i)}$ dont des membres sont des séquences de m(i) éléments de champ F, et

le procédé de reconstruction est **caractérisé en ce qu'**il inclut :

une étape d'entrée à laquelle une unité d'entrée accepte N parties $SS_0$, ..., $SS_{N-1}$, où chaque partie $SS_i$ contient $z_i \in F^{m(i)}$ et $s_i \in F^{w(i)}$,

une étape arithmétique à laquelle une unité arithmétique obtient un membre $x_i = z_i - P_{m(i)}(s_{i(+)}) \in F^{m(i)}$ en utilisant une troisième valeur calculée $z_i \in F^{m(i)}$ contenue dans une partie $SS_i$ et une amorce $s_{i(+)} \in F^{w(i(+))}$ contenue dans une partie $SS_{i(+)}$, dans lequel la quantité de données de l'amorce $s_{i(+)}$ est inférieure à la quantité de données d'une valeur de fonction $P_{m(i)}(S_{i(+)})$, et

une étape de concaténation à laquelle une unité de concaténation obtient une valeur reconstruite $x \in F^m$ qui est exprimée par des membres $x_0$, ..., $X_{N-1}$ obtenus dans l'unité arithmétique où $F^m$ représente un ensemble dont des membres sont des séquences de m éléments de champ F.

8. Programme qui, lorsqu'il est exécuté sur un ordinateur, amène ledit ordinateur à fonctionner en tant que le dispositif de génération de partie selon la revendication 1 ou 2 ou le dispositif de reconstruction selon la revendication 3 ou 4.

9. Support d'enregistrement lisible par ordinateur qui stocke un programme qui, lorsqu'il est exécuté sur un ordinateur, amène ledit ordinateur à fonctionner en tant que le dispositif de génération de partie selon la revendication 1 ou 2 ou le dispositif de reconstruction selon la revendication 3 ou 4.

1 (2)

12 (22)

RECONST
RUCTING
DEVICE

NETWORK

SHARE
GENERATING
DEVICE

SHARE
GENERATING
DEVICE

· · ·

SHARE
GENERATING
DEVICE

11-$A_0$
(21-$A_0$)

11-$A_1$
(21-$A_1$)

11-$A_{N-1}$
(21-$A_{N-1}$)

FIG. 1

11-A$_i$ (21-A$_i$)

111-A$_i$

DIVISION UNIT

117-A$_i$

STORAGE

112-A$_i$

SEED
OBTAINING
UNIT

(215-A$_i$)

JOINT
POSSESSION
UNIT

113-A$_i$

FUNCTION
OPERATION
UNIT

(217-A$_i$)

DIVISION UNIT

114-A$_i$

SECURE
COMPUTATION
UNIT

(218-A$_i$)

CHECKSUM
GENERATION UNIT

115-A$_i$

SECURE
COMPUTATION
UNIT

(219-A$_i$)

CHECKSUM
GENERATION UNIT

116-A$_i$ (216-A$_i$)

SHARE
GENERATION
UNIT

119-A$_i$

CONTROL
UNIT

118-A$_i$

COMMUNICATION
UNIT

FIG. 2

12 (22)

122
ARITHMETIC
UNIT

127
STORAGE

123
CONCATENATION
UNIT

(225)
VERIFICATION
VALUE
GENERATION
UNIT

(224)
RECONSTRUCTION
UNIT

(229)
DIVISION
UNIT

(226)
DETERMINATION
UNIT

121 (221)
COMMUNICATION
UNIT

128
CONTROL
UNIT

FIG. 3

FIG. 4

START

S121 (S221)

INPUT SHARE $SS_i$

S122

$x_i = z_i - P_{m(i)}(s_{i(+)})$ OPERATION

(S2241)

RECONSTRUCT CHECKSUM $c_i$

(S2242)

RECONSTRUCT CHECKSUM $d_i$

(S229)

DIVIDE $x_i$

(S2251)

CALCULATE VERIFICATION VALUE $vc_i$

(S2252)

CALCULATE VERIFICATION VALUE $vd_i$

(S2261)

No ← $c_i = vc_i$?

Yes

(S2262)

No ← $d_i = vd_i$?

Yes

S123

ERROR TERMINATION

(S2263)

CONCATENATE $x_0, ..., x_{N-1}$

END

FIG. 5

27

**EP 3 675 090 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2879324 A1

**Non-patent literature cited in the description**

• **A. SHAMIR.** How to Share a Secret. *Communications of the ACM,* November 1979, vol. 22 (11), 612-613